# EUROPEAN PATENT APPLICATION

(11) **EP 3 744 520 A1**
(43) Date of publication of application: **02.12.2020**
(21) Application number: 19743734.6
(22) Date of filing: 22.01.2019
(51) Int. Cl.: B32B 27/36, B32B 33/00, C08G 12/32

(54) **DECORATIVE LAMINATE**

(30) Priority: 26.01.2018 JP 2018011763; 31.01.2018 JP 2018015349; 31.01.2018 JP 2018015814
(71) Applicant: Sumitomo Bakelite Co.Ltd., Shinagawa-ku Tokyo 140-0002 (JP)
(72) Inventor: TAMURA, Kosaku, Tokyo 140-0002 (JP); HORIUCHI, Satoshi, Tokyo 140-0002 (JP); KIFUKU, Toshinori, Tokyo 140-0002 (JP)
(74) Representative: Ter Meer Steinmeister & Partner
(86) International application number: PCT/JP2019/001899
(87) International publication number: WO 2019/146603

(57) **Abstract**

A decorative laminate of the present invention includes a transparent film, a coating layer constituted of a hard resin material and disposed on a side of a first surface which is one surface of the transparent film, a shielding layer disposed on a side of a second surface of the transparent film, which is the other surface opposite to the first surface, and a printed layer disposed between the coating layer and the shielding layer.

## Description

### Technical Field

The present invention relates to a decorative laminate.

### Background Art

Decorative laminates are attached to the wall surfaces of buildings, hotels, apartment lobbies or conference rooms, and offices. For example, a plurality of decorative laminates having a pattern such as wood grain or stone grain are attached to wall surfaces. In this manner, a comfortable space with a good appearance is created. In addition, such a decorative laminate is used not only as an interior material for real estate, but also as an interior material for vehicles such as trains (for example, refer to PTL 1).

On such a decorative laminate, a texture such as pearskin finish or wood grain may be formed in some cases.

On the other hand, there is a demand for variety in the external appearance of decorative laminates, and there is also a demand for a decorative laminate having an external appearance that cannot be expressed with a texture.

In order to provide such a decorative laminate, it is also considered to provide a printed layer in a decorative laminate.

However, in a case where a printed layer is simply provided in the decorative laminate, the desired aesthetics may not be sufficiently exhibited in a state in which the decorative laminate is processed.

### Citation List

### Patent Literature

[PTL 1] Japanese Laid-open patent publication NO. 2013-202906

### Summary of Invention

### Technical Problem

An object of the present invention is to provide a decorative laminate having excellent aesthetics and excellent scratch resistance and antifouling properties (stain resistance). In addition, another object of the present invention is to provide a decorative laminate having excellent aesthetics (particularly, having an excellent external appearance full of a three-dimensional effect), and excellent scratch resistance and antifouling properties (stain resistance). Still another object of the present invention is to provide a decorative laminate having excellent aesthetics, durability, and antifouling properties (stain resistance).

### Solution to Problem

Such objects are achieved by the present invention described in (1) to (15) below.
(1) A decorative laminate including:
   a transparent film;
   a coating layer constituted of a hard resin material and disposed on a side of a first surface which is one surface of the transparent film;
   a shielding layer disposed on a side of a second surface of the transparent film, which is the other surface opposite to the first surface; and
   a printed layer disposed between the coating layer and the shielding layer.
(2) The decorative laminate according to (1), in which the printed layer is disposed on the side of the second surface of the transparent film.
(3) The decorative laminate according to (2), further including: a gap layer provided between the printed layer and the shielding layer,
   in which a gap length from a surface of the printed layer to a surface of the shielding layer in a case of being observed from the coating layer side of the decorative laminate is 1 µm or more and 50 µm or less.
(4) The decorative laminate according to (3), in which the gap layer is an adhesive layer which bonds the printed layer to the shielding layer.
(5) The decorative laminate according to (2) comprising an adhesive layer, in which the printed layer is provided on a surface of the shielding layer facing the transparent film, and
   the adhesive layer is provided between the transparent film and the shielding layer provided with the printed layer.
(6) The decorative laminate according to any one of (1) to (5), in which the printed layer is disposed on the side of the first surface of the transparent film.
(7) The decorative laminate according to any of (1) to (6), in which the hard resin material constituting the coating layer contains a melamine-based resin.
(8) The decorative laminate according to any one of (1) to (7), further including: a core layer on a surface side of the shielding layer opposite to a surface facing the transparent film.
(9) The decorative laminate according to (8), in which the core layer contains glass fibers.
(10) The decorative laminate according to any one of (1) to (9), in which the shielding layer exhibits white or metallic luster.
(11) The decorative laminate according to any one of (1) to (10), in which the shielding layer is constituted of a material containing polyethylene terephthalate.
(12) The decorative laminate according to (11), in which the shielding layer is constituted of a material containing at least one of titanium oxide and zinc oxide in addition to the polyethylene terephthalate.
(13) The decorative laminate according to any one of (1) to (12), in which the shielding layer has a thickness of 10 µm or more and 300 µm or less.
(14) The decorative laminate according to any one of (1) to (13), in which the transparent film includes a base constituted of a material containing polyethylene terephthalate, and an ink receiving layer.
(15) The decorative laminate according to any one of (1) to (14), in which the shielding layer includes an ink receiving layer.

### Advantageous Effects of Invention

According to the present invention, it is possible to provide a decorative laminate having excellent aesthetics and excellent scratch resistance and antifouling properties (stain resistance). In addition, according to the present invention, it is possible to provide a decorative laminate having excellent aesthetics (particularly, having an excellent external appearance full of a three-dimensional effect), and excellent scratch resistance and antifouling properties (stain resistance) . Further, according to the present invention, it is possible to provide a decorative laminate having excellent aesthetics and excellent durability and antifouling properties (stain resistance).

### Brief Description of Drawings

FIG. 1 is a cross-sectional view schematically showing a first embodiment of a decorative laminate according to the present invention.
FIG. 2 is a cross-sectional view schematically showing a second embodiment of the decorative laminate according to the present invention.
FIGS. 3A to 3D are cross-sectional views showing a first embodiment of a method for producing the decorative laminate according to the present invention.
FIGS. 4A to 4D are cross-sectional views showing a second embodiment of the method for producing the decorative laminate according to the present invention.
FIG. 5 is a cross-sectional view showing another suitable embodiment of the decorative laminate according to the present invention.
FIG. 6 is a cross-sectional view showing still another suitable embodiment of the decorative laminate according to the present invention.
FIG. 7 is a cross-sectional view schematically showing a third embodiment of the decorative laminate according to the present invention.
FIG. 8 is a cross-sectional view schematically showing a fourth embodiment of the decorative laminate according to the present invention.
FIGS. 9A to 9C are cross-sectional views showing a fourth embodiment of the method for producing the decorative laminate according to the present invention.

### Description of Embodiments

Hereinafter, a decorative laminate according to the present invention will be described in detail based on suitable embodiments shown in the accompanying drawings.

### <<Decorative Laminate>>

A decorative laminate is attached to the wall surfaces of buildings, hotels, lobbies and elevators of apartments, conference rooms, and offices. As a result, the appearance and comfortableness of a space can be improved. In addition, the decorative laminate may be used not only as an interior material for real estate but also as an interior material for vehicles such as trains, airplanes, and ships.

### [First Embodiment]

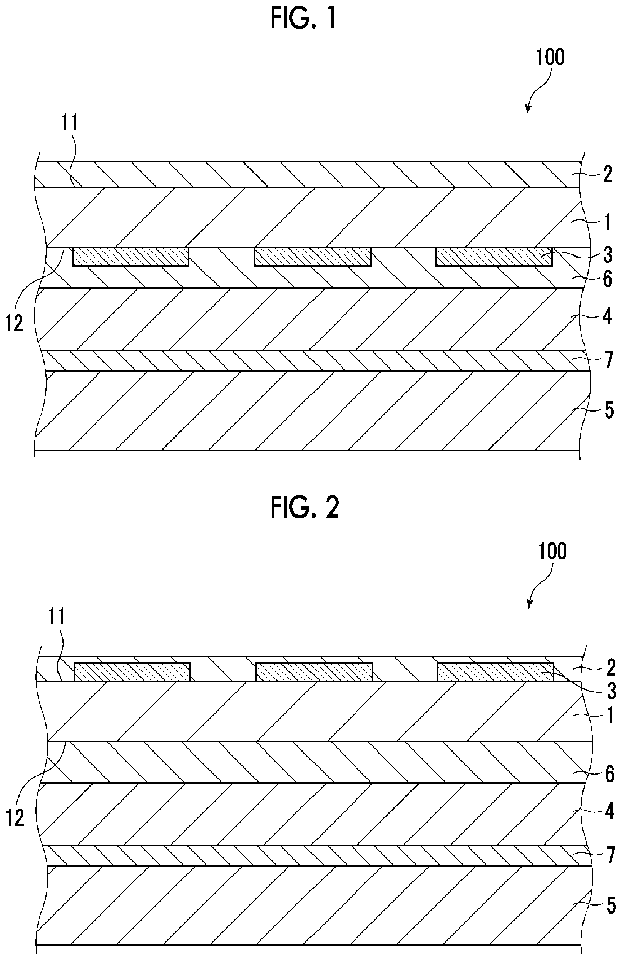

FIG. 1 is a cross-sectional view schematically showing a first embodiment of a decorative laminate according to the present invention.

As shown in FIG. 1, a decorative laminate 100 according to an embodiment is formed by laminating a coating layer (hard resin layer) 2 constituted of a hard resin material, a transparent film (transparent base material) 1, a printed layer 3, an adhesive layer 6, a shielding layer 4, an adhesive layer 7, and a core material (core layer) 5 in this order.

When the decorative laminate 100 is used as, for example, an interior material, the upper side in FIG. 1 is the viewpoint side of an observer.

In other words, the decorative laminate 100 includes a transparent film 1, a coating layer 2 constituted of a hard resin material and disposed on a first surface 11 side which is one surface of the transparent film 1, a shielding layer 4 disposed on a second surface 12 side of the transparent film 1, which is a surface opposite to the first surface 11, and a printed layer 3 disposed between the coating layer 2 and the shielding layer 4. Further, in other words, the decorative laminate 100 includes a transparent film 1 provided with a printed layer 3, a coating layer 2 constituted of a hard resin material and disposed on a first surface 11 side which is one surface of the transparent film 1, and a shielding layer 4 disposed on a second surface 12 side of the transparent film 1, which is a surface opposite to the first surface 11.

With such a configuration, a pattern of the printed layer 3 can be suitably reflected on the external appearance of the decorative laminate 100 while exhibiting the features of the hard resin material such as scratch resistance and antifouling properties, and thus a decorative laminate 100 having excellent aesthetics can be provided. In particular, regardless of a construction portion of the decorative laminate 100 (a substrate of the decorative laminate 100), excellent aesthetics can be stably exhibited. Accordingly, it is possible to provide a decorative laminate 100 having excellent aesthetics and excellent scratch resistance (difficulty of scratching) and antifouling properties (difficulty of adhesion of stains and ease of stain removal) . In addition, by providing the printed layer 3 together with the shielding layer 4, it is possible to express various patterns and color tones and to provide a decorative laminate 100 having particularly excellent aesthetics.

In particular, in the embodiment, the printed layer 3 is disposed on the second surface 12 side of the transparent film 1.

Thus, the wear resistance of the decorative laminate 100 can be particularly improved.

### <Transparent Film>

The transparent film (transparent base material) 1 has a function of supporting the coating layer 2, the printed layer 3, and the like.

In addition, the transparent film 1 suitably transmits light reflected by the printed layer 3 and the shielding layer 4. That is, the transparent film 1 has sufficient light transmittance so that an observer can visually recognize the transmitted light.

The transparent film 1 has light transmittance (transparency) at such an extent that the decorative laminate 100 having sufficiently excellent aesthetics can be provided (an extent to which the printed layer 3 and the shielding layer 4 affect the external appearance of the decorative laminate 100). For example, in the transparent film 1, the light transmittance for each wavelength in a range of 380 nm or more and 780 nm or less is preferably 80% or more, more preferably 85% or more, and even more preferably 90% or more.

Accordingly, it is possible to provide a decorative laminate 100 having more excellent aesthetics.

The transparent film 1 may be constituted of any material as long as the material is a transparent material. Examples of the constituent material of the transparent film 1 include various resin materials and various glass materials.

Among these, from the viewpoint of stability with respect to bending external force and the like, ease of handling, the production cost of the decorative laminate 100, and the like, it is preferable that the transparent film 1 has a configuration containing a resin material (transparent resin film).

As the resin material constituting the transparent film 1, for example, various thermoplastic resins, cured products of curable resin materials, and the like can be used. Specific examples of the resin material constituting the transparent film 1 include polyolefins such as polyethylene, polypropylene, ethylene-propylene copolymers, and ethylene-vinyl acetate copolymers (EVA), polyesters such as cyclic polyolefin (COP), modified polyolefin, polyvinyl chloride, polyvinylidene chloride, polystyrene, polyamides (for example, nylon 6, nylon 46, nylon 66, nylon 610, nylon 612, nylon 11, nylon 12, nylon 6-12, and nylon 6-66), polyimide, polyamideimide, polycarbonate (PC), poly-(4-methylpentene-1), ionomers, acrylic resins, polymethylmethacrylate, acrylonitrile-butadiene-styrene copolymers (ABS resins), acrylonitrile-styrene copolymers (AS resins), butadiene-styrene copolymers, polyoxymethylene, polyvinyl alcohol (PVA), ethylene-vinyl alcohol copolymers (EVOH), polyethylene terephthalate (PET), polybutylene terephthalate (PBT), and polycyclohexane terephthalate (PCT), polyether, polyetherketone (PEK), polyether ether ketone (PEEK), polyetherimide, polyacetal (POM), polyphenylene oxide, modified polyphenylene oxide, polysulfone, polyether sulfone, polyphenylene sulfide, polyarylate, aromatic polyesters (liquid crystal polymers), polytetrafluoroethylene, polyvinylidene fluoride, other fluororesins, various thermoplastic elastomers such as styrene-based, polyolefin-based, polyvinyl chloride-based, polyurethane-based, polyester-based, polyamide-based, polybutadiene-based, trans-polyisoprene-based, fluororubber-based, and chlorinated polyethylene-based elastomers, epoxy resins, phenol resins, urea resins, melamine resins, unsaturated polyester, silicone-based resins, urethane-based resins, polyparaxylylene resins such as such as poly-para-xylylene, poly-monochloro-para-xylylene, poly-dichloro-para-xylylene, poly-monofluoro-para-xylylene, and poly-monoethyl-para-xylylene, and copolymers, blends, and polymer alloys containing these as a main component. The transparent film 1 can be constituted by using one of these materials alone or two or more thereof in combination (for example, as a blend resin, a polymer alloy, a laminate, and the like).

The transparent film 1 may contain components other than those components mentioned above.

Examples of such components include colorants, slip agents (leveling agents), fillers, ultraviolet absorbers, plasticizers, fungicides, preservatives, antioxidants, chelating agents, thickeners, antifoaming agents, and sensitizers (sensitizing dyes) .

The content of the resin material in the transparent film 1 is preferably 80% by mass or more, more preferably 90% by mass or more, and even preferably 95% by mass or more.

Thus, the effects described above are more significantly exhibited.

The transparent film 1 may have a uniform composition in each portion or may have a plurality of portions having different compositions.

For example, the transparent film 1 may include a base constituted of a material containing polyethylene terephthalate, and an ink receiving layer.

Thus, the stability with respect to a bending external force and the like and the ease of handling can be further improved, the adhesion of the printed layer 3 and the precision of the printed layer 3 can be further improved, and the durability and aesthetics of the decorative laminate 100 can be further improved.

Although the thickness of the transparent film 1 is not particularly limited, the thickness is preferably 10 µm or more and 300 µm or less, and more preferably 20 µm or more and 150 µm or less.

Thus, it is possible to particularly improve the workability, durability, reliability, and the like of the decorative laminate 100 while achieving a reduction in the thickness of the decorative laminate 100.

On the other hand, in a case where the thickness of the transparent film 1 is excessively small, the durability of the decorative laminate 100 is deteriorated. In particular, the properties of the surface of the decorative laminate 100 are greatly affected by the layer (such as the adhesive layer 6) on the inner side of the transparent film 1. As a result, it may be difficult to sufficiently improve the scratch resistance and the like of the decorative laminate 100.

In addition, in a case where the thickness of the transparent film 1 is excessively large, it becomes difficult to reduce the thickness of the decorative laminate 100, and the workability of the decorative laminate 100 is deteriorated.

### <Coating Layer>

The coating layer 2 constituted of a hard resin material is provided on the first surface 11 side of the transparent film 1 (the viewpoint side of an observer in a state in which the decorative laminate 100 is placed) . The coating layer 2 is formed by using a composition for forming a coating layer containing a hard resin material.

By providing such a coating layer 2, it is possible to improve the scratch resistance, antifouling properties (stain resistance) and the like of the decorative laminate 100.

In addition, the hard resin material constituting the coating layer 2 generally has high transparency. Accordingly, the coating layer 2 suitably transmits the light reflected by the printed layer 3 and the shielding layer 4 together with the transparent film 1. Thus, the transmitted light can be visually recognized by an observer, and a decorative laminate 100 having excellent aesthetics can be provided.

The coating layer 2 also has a function of protecting the printed layer 3, the shielding layer 4, and the like.

Accordingly, it is possible to provide a decorative laminate 100 that stably has excellent aesthetics over a long period of time.

The coating layer 2 may have light transmittance (transparency) to the extent that the decorative laminate 100 having sufficiently excellent aesthetics can be provided (the extent to which the printed layer 3 and the shielding layer 4 affect the external appearance of the decorative laminate 100). For example, in the coating layer 2, the light transmittance for each wavelength in a range of 380 nm or more and 780 nm or less is preferably 80% or more, more preferably 85% or more, and even more preferably 90% or more.

Accordingly, it is possible to provide a decorative laminate 100 having more excellent aesthetics.

The Martens hardness of the surface of the coating layer 2 (the surface on the side opposite to the surface facing the transparent film 1) is preferably 200 N/mm² or more and 800 N/mm² or less, and more preferably 300 N/mm² or more and 700 N/mm² or less.

Thus, it is possible to make the decorative laminate 100 particularly hard to be scratched.

In contrast, in a case where the Martens hardness of the surface of the coating layer 2 is less than the lower limit value, the scratch resistance and the like of the coating layer 2 are deteriorated, and thus the decorative laminate 100 is easily scratched.

In addition, in a case where the Martens hardness of the surface of the coating layer 2 is more than the upper limit value, the workability of the decorative laminate 100 may be deteriorated.

Examples of the constituent material of the coating layer 2 include resin materials such as melamine-based resins, urea-based resins, vinyl chloride-based resins, phenol-based resins, acrylic resins, and urethane-based resins, and inorganic materials such as ceramic-based and glass-based materials. Among these, the coating layer 2 is preferably constituted of a material containing a melamine-based resin.

Thus, it is possible to provide a decorative laminate 100 which has appropriate elasticity and rigidity and has particularly excellent handleability (ease of handling). In addition, among various hard resin materials, a melamine-based resin has particularly high surface hardness and has particularly excellent scratch resistance and antifouling properties (difficulty of adhesion of stains). Therefore, the melamine-based resin is preferable from the viewpoint of further improving the aesthetics and durability of the decorative laminate 100.

Hereinafter, a case where the coating layer 2 is constituted of a material containing a melamine-based resin will be mainly described.

The melamine-based resin is a resin containing a melamine compound and an aldehyde compound as constituent components.

The melamine compound is a compound having a 1,3,5-triazine skeleton and is a compound in which three amino groups are introduced into the triazine ring.

A preferable structure of the melamine compound is represented by, for example, the following formula (3).

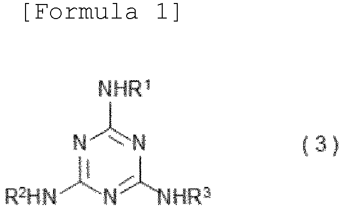

(In the formula (3), R¹, R², and R³ each independently represent a hydrogen atom or a hydrocarbon group having 1 to 4 carbon atoms which may have a substituent.)

As the melamine compound, a compound (melamine) in which all of R¹, R², and R3 in the formula (3) represent a hydrogen atom is particularly preferable.

Thus, the hardness of the decorative laminate 100 can be further improved. In addition, the melamine resin constituting the decorative laminate 100 can be more efficiently synthesized.

The aldehyde compound may have an aldehyde group (-CHO) in the molecule and is represented by, for example, the following formula (2).

[Formula 2]

R-CHO (2)

(In the formula (2), R represents a hydrogen atom or a hydrocarbon group having 1 to 10 carbon atoms which may have a substituent.)

As the aldehyde compound, formaldehyde is particularly preferable.

Thus, the hardness of the decorative laminate 100 can be further improved. In addition, the melamine resin constituting the decorative laminate 100 can be more efficiently synthesized.

The melamine-based resin may contain a melamine compound and an aldehyde compound as constituent components. The melamine-based resin may further contain a guanamine compound as a constituent component in addition to the melamine compound and the aldehyde compound.

Thus, the workability of the decorative laminate 100 can be particularly improved while the hardness of the decorative laminate 100 is sufficiently improved.

The guanamine compound is a compound having a 1,3,5-triazine skeleton and is a compound in which two amino groups are introduced into the triazine ring.

A preferable structure of the guanamine compound is represented by, for example, the following formula (1).

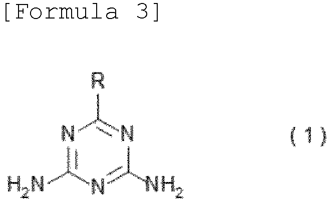

(In the formula (1), R represents a hydrogen atom or a hydrocarbon group having 1 to 10 carbon atoms which may have a substituent.)

As the guanamine compound, a compound (acetoguanamine) in which R in the formula (1) is a methyl group is particularly preferable.

Thus, the hardness and workability of the decorative laminate 100 can be achieved at a higher level. In addition, the melamine resin constituting the decorative laminate 100 can be more efficiently synthesized.

The melamine resin is not particularly limited. For example, a melamine-based resin obtained by allowing a melamine-based compound to react with an aldehyde-based compound in a neutral or weak alkali, and the like can be used.

A reaction molar ratio of the aldehyde-based compound to the melamine-based compound (which is a value of (molar amount of aldehyde-based compound)/(molar amount of melamine-based compound), and hereinafter, sometimes simply referred to as "reaction molar ratio") is not particularly limited. The reaction molar ratio is preferably 1.0 or more and 4.0 or less, more preferably 1.0 or more and 2.0 or less, and even preferably 1.1 or more and 1.8 or less.

In a case where the reaction molar ratio is less than the lower limit value, the amount of unreacted components increases. As a result, the storage properties of the melamine-based resin obtained may be deteriorated and the cost may increase.

In addition, in a case where the reaction molar ratio is more than the upper limit value, the flexibility of the melamine-based resin after curing may be significantly reduced.

Regarding the melamine-based resin, one melamine-based resin may be used alone, or two or more of melamine-based resins having different reaction molar ratios, weight average molecular weights, and the like may be mixed and used.

In addition, as the melamine-based resin, for example, a commercially available product such as a melamine-based resin manufactured by Sumitomo Chemical Co., Ltd. can be used.

The coating layer 2 may contain components other than the components described above.

Examples of such components include inorganic fillers, colorants, slip agents (leveling agents), fillers, ultraviolet absorbers, plasticizers, fungicides, preservatives, antioxidants, chelating agents, thickeners, antifoaming agents, and sensitizers (sensitizing dyes).

The content of the melamine-based resin in the coating layer 2 is not particularly limited, but is preferably 80% by mass or more and 100% by mass or less, and more preferably 95% by mass or more and 100% by mass or less.

Thus, the effects described above are more significantly exhibited.

The thickness of the coating layer 2 is not particularly limited, but is preferably 1 µm or more and 30 µm or less, and more preferably 3 µm or more and 20 µm or less.

Thus, the scratch resistance and antifouling properties (stain resistance) of the decorative laminate 100 can be particularly improved, and the bending workability and the like of the decorative laminate 100 can also be improved.

In addition, the outer surface (the surface on the side opposite to the surface facing the transparent film 1) side of the coating layer 2 may be subjected to surface finish such as mirror finish or embossing finish.

Thus, the aesthetics of the decorative laminate 100 can be further improved.

### <Printed Layer>

The printed layer 3 is provided on the second surface 12 (the surface opposite to the first surface 11) side of the transparent film 1.

The printed layer 3 is provided on the outer surface side (viewpoint side of an observer) of the decorative laminate 100 with respect to the shielding layer 4 together with the shielding layer 4 described in detail later. Thus, it is possible to provide a decorative laminate 100 having particularly excellent aesthetics. Specifically, for example, the contrast between the printed layer 3 and the shielding layer 4 can be increased, and the printed layer 3 can be more easily visually recognized. As a result, it is possible to provide a decorative laminate 100 having particularly excellent aesthetics.

Further, since the printed layer 3 is provided on the second surface 12 side of the transparent film 1, the durability of the decorative laminate 100 can be particularly improved.

The printed layer 3 is usually constituted of a material containing a colorant such as a pigment or a dye.

In addition, the printed layer 3 may contain a resin material in addition to the colorant. Thus, the adhesion of the printed layer 3 to the transparent film 1 and the like can be improved, and the durability of the decorative laminate 100 can be further improved. Further, when the decorative laminate 100 is produced, it is possible to more effectively prevent or suppress unintended cissing and wetting and spreading of the ink used for forming the printed layer 3. Thus, the accuracy of the pattern of the printed layer 3 can be more reliably improved.

As the resin material constituting the printed layer 3, for example, various thermoplastic resins, cured products of curable resin materials, and the like can be used. Specific examples of the resin material constituting the printed layer 3 include polyolefins such as polyethylene, polypropylene, ethylene-propylene copolymers, and ethylene-vinyl acetate copolymers (EVA), polyesters such as cyclic polyolefin (COP), modified polyolefin, polyvinyl chloride, polyvinylidene chloride, polystyrene, polyamides (for example, nylon 6, nylon 46, nylon 66, nylon 610, nylon 612, nylon 11, nylon 12, nylon 6-12, and nylon 6-66), polyimide, polyamideimide, polycarbonate (PC), poly-(4-methylpentene-1), ionomers, acrylic resins, polymethylmethacrylate, acrylonitrile-butadiene-styrene copolymers (ABS resins), acrylonitrile-styrene copolymers (AS resins), butadiene-styrene copolymers, polyoxymethylene, polyvinyl alcohol (PVA), ethylene-vinyl alcohol copolymers (EVOH), polyethylene terephthalate (PET), polybutylene terephthalate (PBT), and polycyclohexane terephthalate (PCT), polyether, polyetherketone (PEK), polyether ether ketone (PEEK), polyetherimide, polyacetal (POM), polyphenylene oxide, modified polyphenylene oxide, polysulfone, polyether sulfone, polyphenylene sulfide, polyarylate, aromatic polyesters (liquid crystal polymers), polytetrafluoroethylene, polyvinylidene fluoride, other fluororesins, various thermoplastic elastomers such as styrene-based, polyolefin-based, polyvinyl chloride-based, polyurethane-based, polyester-based, polyamide-based, polybutadiene-based, trans-polyisoprene-based, fluororubber-based, and chlorinated polyethylene-based elastomers, epoxy resins, phenol resins, urea resins, melamine resins, unsaturated polyester, silicone-based resins, urethane-based resins, polyparaxylylene resins such as such as poly-para-xylylene, poly-monochloro-para-xylylene, poly-dichloro-para-xylylene, poly-monofluoro-para-xylylene, and poly-monoethyl-para-xylylene, and copolymers, blends, and polymer alloys containing these as a main component. The printed layer 3 can be constituted by using one of these materials alone or two or more thereof in combination (for example, as a blend resin, a polymer alloy, a laminate, and the like).

The printed layer 3 may contain components other than those components described above.

Examples of such components include slip agents (leveling agents), fillers, ultraviolet absorbers, plasticizers, dispersants, penetration accelerators, wetting agents (moisturizers), fixing agents, fungicides, preservatives, and antioxidants, chelating agents, thickeners, antifoaming agents, and sensitizers (sensitizing dyes).

The printed layer 3 may be provided in any pattern, but this pattern is usually determined according to the demand of a consumer.

Examples of the pattern of the printed layer 3 include wood grain, stone grain, scoring, and various geometric patterns.

In the configuration shown in the drawing, the printed layer 3 is selectively provided on only a part of the second surface 12 of the transparent film 1, but the present invention is not limited thereto. For example, the printed layer 3 may be provided over the entire second surface 12 of the transparent film 1 as long as at least a part of the reflected light from the shielding layer 4 can be transmitted.

In addition, in the configuration shown in the drawing, there is a clear interface between the transparent film 1 and the printed layer 3, but the present invention is not limited thereto. For example, in the production process of the decorative laminate 100, the interface between the transparent film 1 and the printed layer 3 may be unclear (indistinct) due to dissolution of a part of the transparent film 1 or the like.

In addition, for example, in a case where the transparent film 1 has an ink receiving layer, the printed layer 3 may be formed inside the transparent film 1 by the ink penetrating into the transparent film 1 (particularly, the ink receiving layer).

### <Shielding Layer>

The shielding layer 4 having shielding properties is provided on the surface side of the printed layer 3 opposite to the surface facing the transparent film 1.

By providing the shielding layer 4, the state of the back surface side of the shielding layer 4 (the surface on the side opposite to the surface facing the printed layer 3) can be shielded. Accordingly, it is possible to effectively prevent the configuration of the decorative laminate 100 on the back side of the shielding layer 4 and a portion (a wall surface or the like) where the decorative laminate 100 is placed from adversely affecting the external appearance of the decorative laminate 100. As a result, the decorative laminate 100 having a desired external appearance can be reliably obtained.

In particular, since the shielding layer 4 is provided on a side (inner side) farther from the viewpoint of an observer than the printed layer 3 in a state in which the decorative laminate 100 is in use, the following effect can be obtained. That is, it is possible to allow an observer to visually recognize the color tone and pattern of the combination of the printed layer 3 and the shielding layer 4. Therefore, it is possible to provide a decorative laminate 100 having particularly excellent aesthetics.

In addition, the shielding layer 4 is provided on the inner side of the coating layer 2, the transparent film 1, and the like, so that the durability of the decorative laminate 100 can be further improved.

The shielding layer 4 may have a function of shielding (concealing) the back surface side thereof, and the color tone thereof is not particularly limited. However, from the viewpoint of the following effects, the shielding layer 4 preferably exhibits an achromatic color.

As a result, the contrast of the external appearance of the decorative laminate 100 can be improved, and the visibility of the printed layer 3 and the aesthetics of the printed layer 3 or the like can be further improved. In addition, since the achromatic color can exhibit excellent visibility and aesthetics in combination with a wide range of colors, the range of color tone selection of the printed layer 3 is widened. In addition, even in a case where the printed layer 3 is accompanied by a delicate change in color tone at each portion, it is easy for an observer to visually recognize such a delicate change in color tone, which is advantageous in that the aesthetics of the decorative laminate 100 is further improved.

Such effects are more remarkably exhibited in a case where the shielding layer 4 exhibits white or metallic luster.

In the shielding layer 4, the light transmittance for each wavelength in a range of 380 nm or more and 780 nm or less is preferably 0% or more and 40% or less, more preferably 0% or more and 30% or less, and even more preferably 0% or more and 25% or less.

Thus, the effects are more remarkably exhibited by providing the shielding layer 4.

The shielding layer 4 may be constituted of any material, and examples of the constituent material of the shielding layer 4 include a resin material, a metal material, and a metal compound such as a metal oxide.

As the resin material, various thermoplastic resins, cured products of curable resin materials, and the like can be used. More specific examples thereof include polyolefins such as polyethylene, polypropylene, ethylene-propylene copolymers, and ethylene-vinyl acetate copolymers (EVA), polyesters such as cyclic polyolefin (COP), modified polyolefin, polyvinyl chloride, polyvinylidene chloride, polystyrene, polyamides (for example, nylon 6, nylon 46, nylon 66, nylon 610, nylon 612, nylon 11, nylon 12, nylon 6-12, and nylon 6-66), polyimide, polyamideimide, polycarbonate (PC), poly-(4-methylpentene-1), ionomers, acrylic resins, polymethylmethacrylate, acrylonitrile-butadiene-styrene copolymers (ABS resins), acrylonitrile-styrene copolymers (AS resins), butadiene-styrene copolymers, polyoxymethylene, polyvinyl alcohol (PVA), ethylene-vinyl alcohol copolymers (EVOH), polyethylene terephthalate (PET), polybutylene terephthalate (PBT), and polycyclohexane terephthalate (PCT), polyether, polyetherketone (PEK), polyether ether ketone (PEEK), polyetherimide, polyacetal (POM), polyphenylene oxide, modified polyphenylene oxide, polysulfone, polyether sulfone, polyphenylene sulfide, polyarylate, aromatic polyesters (liquid crystal polymers), polytetrafluoroethylene, polyvinylidene fluoride, other fluororesins, various thermoplastic elastomers such as styrene-based, polyolefin-based, polyvinyl chloride-based, polyurethane-based, polyester-based, polyamide-based, polybutadiene-based, trans-polyisoprene-based, fluororubber-based, and chlorinated polyethylene-based elastomers, epoxy resins, phenol resins, urea resins, melamine resins, unsaturated polyester, silicone-based resins, urethane-based resins, polyparaxylylene resins such as such as poly-para-xylylene, poly-monochloro-para-xylylene, poly-dichloro-para-xylylene, poly-monofluoro-para-xylylene, and poly-monoethyl-para-xylylene, and copolymers, blends, and polymer alloys containing these as a main component. The shielding layer 4 can be constituted by using one of these materials alone or two or more thereof in combination (for example, as a blend resin, a polymer alloy, a laminate, and the like).

Among these, the shielding layer 4 is preferably constituted of a material containing at least polyethylene terephthalate.

Thus, the adhesion of the shielding layer 4 to the adhesive layer 6, the core material 5, and the printed layer 3 can be further improved, and the durability of the decorative laminate 100 can be further improved. In addition, since the shielding layer 4 constituted of a material containing polyethylene terephthalate generally has appropriate flexibility, the workability and ease of handling of the decorative laminate 100 as a whole are improved.

Further, the shielding layer 4 may contain components other than the above-mentioned components.

Examples of such components include white pigments such as titanium oxide and zinc oxide; black pigments such as carbon black; other pigments; various dyes; and various metal materials.

By incorporating such a component, it is possible to further improve the shielding properties by the shielding layer 4 while more effectively preventing deterioration of properties (for example, adhesion with the transparent film 1 or the printed layer 3, toughness, and flexibility) other than the shielding properties of the shielding layer 4.

Among these, the shielding layer 4 is preferably constituted of a material containing at least one of titanium oxide and zinc oxide in addition to polyethylene terephthalate. Thus, the durability of the decorative laminate 100 can be improved, and the shielding layer 4 can exhibit white with high brightness or metallic luster. In addition, the use of the above material is also advantageous from the viewpoint of reducing the production cost of the decorative laminate 100.

In addition, the shielding layer 4 may contain components other than those components described above.

Examples of such components include slip agents (leveling agents), fillers, ultraviolet absorbers, plasticizers, fungicides, preservatives, antioxidants, chelating agents, thickeners, and antifoaming agents.

Further, the shielding layer 4 may contain a plurality of bubbles.

Thus, it is possible to improve the shielding properties of the shielding layer 4 by diffuse reflection of light while reducing the content of a component other than the resin material (for example, polyethylene terephthalate) in the shielding layer 4.

In a case where the shielding layer 4 is constituted of a material containing polyethylene terephthalate, the content of polyethylene terephthalate in the shielding layer 4 is not particularly limited, but is preferably 60% by mass or more and 99.5% by mass or less, and more preferably 80% by mass or more and 99% by mass or less.

Thus, the effects described above are more significantly exhibited.

Although the thickness of the shielding layer 4 is not particularly limited, the thickness is preferably 10 µm or more and 300 µm or less, and more preferably 20 µm or more and 200 µm or less.

Thus, it is possible to more effectively exhibit the function of the shielding layer 4 (for example, the shielding properties of the shielding layer 4) while effectively preventing the decorative laminate 100 from becoming thicker than necessary. In addition, the stability with respect to a bending external force and the like and ease of handling can be further improved.

For example, the shielding layer 4 may have a surface having high flatness. In addition, the surface of the shielding layer 4 may be subjected to a surface roughening treatment such as embossing, scoring, or blasting.

The surface roughening treatment may be applied to the surface on the side facing the transparent film 1 or the surface on the side facing the core material 5 (the surface on the side opposite to the surface facing the transparent film 1) or may be applied to both of the surfaces. In addition, the surface roughening treatment may be performed on the entire target surface, or may be performed on only a part of the surface.

The above-mentioned shielding layer 4 can also function as a portion where the printed layer 3 is provided, that is, a substrate of the printed layer 3. Even with such a configuration, the shielding layer 4 is disposed on the side (inner side) farther from the viewpoint of an observer than the printed layer 3 in a state in which the decorative laminate 100 is in use. Thus, an observer can suitably visually recognize the color tone and pattern of the combination of the printed layer 3 and the shielding layer 4 and a decorative laminate 100 having particularly excellent aesthetics can be provided. In particular, since the printed layer 3 is provided on the shielding layer 4 (the printed layer 3 is in contact with the shielding layer 4), compared to a case where another configuration is provided between the printed layer and the shielding layer, the pattern of the printed layer 3 has excellent contrast and can be clearly recognized by an observer. As a result, it is possible to provide a decorative laminate 100 having particularly excellent aesthetics.

In a case where the shielding layer 4 has a function as the substrate of the printed layer 3, the shielding layer 4 preferably includes an ink receiving layer.

Thus, the ink used for forming the printed layer 3 is allowed to suitably permeate into the shielding layer 4 (ink receiving layer), and the adhesion between the printed layer 3 and the shielding layer 4 can be further improved. In addition, by forming the printed layer 3 inside the shielding layer 4, the proportion of the printed layer 3 that is exposed on the surface (the surface facing the transparent film 1) of the shielding layer 4 can be suppressed, and a difference in adhesiveness (adhesiveness via the adhesive layer 6) to the transparent film 1 at each portion in the plane of the shielding layer 4 can be reduced. As a result, the reliability of the decorative laminate 100 can be further improved. In addition, even in a case where the shielding layer 4 does not contain a colorant or in a case where the shielding layer 4 contains a colorant at a low content, the shielding properties of the shielding layer 4 can be improved. Accordingly, it is possible to effectively prevent unintended changes in the physical properties of the shielding layer 4 by incorporating a colorant in the shielding layer 4 (particularly, incorporating a colorant at the relatively high content), and to easily obtain a shielding layer 4 having desired physical properties.

The ink receiving layer may have void portions. In this case, the void portion may be provided, for example, as a gap between a plurality of particles as a constituent component constituting the ink receiving layer. However, the void portions are preferably formed by foaming.

Thus, the ink used for forming the printed layer 3 is allowed to more suitably permeate into the shielding layer 4 (ink receiving layer), and the adhesion between the printed layer 3 and the shielding layer 4 can be further improved.

The porosity (volume ratio occupied by the void portions) in the ink receiving layer is not particularly limited, but is preferably 5% by volume or more and 60% by volume or less, more preferably 10% by volume or more and 55% by volume or less, and even more preferably 15% by volume or more and 50% by volume or less.

Thus, while sufficiently improving the strength of the ink receiving layer, the effect obtained by providing the ink receiving layer as described above can be more effectively exhibited.

In a case where the void portions in the ink receiving layer are holes, the average diameter of the holes is preferably 10 nm or more and 10 µm or less, more preferably 20 nm or more and 7 µm or less, and even more preferably 30 nm or more and 5 µm or less.

Thus, the effect described above is more remarkably exhibited, the ink absorbency can be further improved, and the formation efficiency of the printed layer 3 (the productivity of the decorative laminate 100) can be further improved.

The constituent material of the ink receiving layer (substantial portion) is not particularly limited, but various resin materials such as various thermoplastic resins, and cured products of curable resin materials are preferable. Specific examples of the resin material constituting the ink receiving layer (substantial portion) include polyolefins such as polyethylene, polypropylene, ethylene-propylene copolymers, and ethylene-vinyl acetate copolymers (EVA), polyesters such as cyclic polyolefin (COP), modified polyolefin, polyvinyl chloride, polyvinylidene chloride, polystyrene, polyamides (for example, nylon 6, nylon 46, nylon 66, nylon 610, nylon 612, nylon 11, nylon 12, nylon 6-12, and nylon 6-66), polyimide, polyamideimide, polycarbonate (PC), poly-(4-methylpentene-1), ionomers, acrylic resins, polymethylmethacrylate, acrylonitrile-butadiene-styrene copolymers (ABS resins), acrylonitrile-styrene copolymers (AS resins), butadiene-styrene copolymers, polyoxymethylene, polyvinyl alcohol (PVA), ethylene-vinyl alcohol copolymers (EVOH), polyethylene terephthalate (PET), polybutylene terephthalate (PBT), and polycyclohexane terephthalate (PCT), polyether, polyetherketone (PEK), polyether ether ketone (PEEK), polyetherimide, polyacetal (POM), polyphenylene oxide, modified polyphenylene oxide, polysulfone, polyether sulfone, polyphenylene sulfide, polyarylate, aromatic polyesters (liquid crystal polymers), polytetrafluoroethylene, polyvinylidene fluoride, other fluororesins, various thermoplastic elastomers such as styrene-based, polyolefin-based, polyvinyl chloride-based, polyurethane-based, polyester-based, polyamide-based, polybutadiene-based, trans-polyisoprene-based, fluororubber-based, and chlorinated polyethylene-based elastomers, epoxy resins, phenol resins, urea resins, melamine resins, unsaturated polyester, silicone-based resins, urethane-based resins, polyparaxylylene resins such as such as poly-para-xylylene, poly-monochloro-para-xylylene, poly-dichloro-para-xylylene, poly-monofluoro-para-xylylene, and poly-monoethyl-para-xylylene, and copolymers, blends, and polymer alloys containing these as a main component. The ink receiving layer can be constituted by using one of these materials alone or two or more thereof in combination (for example, as a blend resin, a polymer alloy, a laminate, and the like).

The content of the resin material in the ink receiving layer is not particularly limited, but is preferably 90% by mass or more and 99.5% by mass or less, and more preferably 95% by mass or more and 99% by mass or less.

Thus, the effects described above are more significantly exhibited.

The thickness of the ink receiving layer is not particularly limited, but is preferably 20 nm or more and 50 µm or less, more preferably 30 nm or more and 40 µm or less, and even more preferably 40 nm or more and 30 µm or less.

Thus, it is possible to more effectively prevent thickening of the decorative laminate 100 while further improving the shielding properties by the shielding layer 4.

The base of the shielding layer 4 is preferably constituted of a material including polyethylene terephthalate.

Thus, more suitable elasticity and rigidity can be imparted to the entire decorative laminate 100, and the decorative laminate 100 having particularly excellent handleability (easiness of handling) can be provided.

In addition, the base of the shielding layer 4 may contain components other than the resin material. Examples of such components include colorants, slip agents (leveling agents), fillers, ultraviolet absorbers, plasticizers, fungicides, preservatives, antioxidants, chelating agents, thickeners, antifoaming agents, and sensitizers (sensitizing dyes).

The content of the resin material in the base is not particularly limited, but is preferably 90% by mass or more and 99.5% by mass or less, and more preferably 95% by mass or more and 99% by mass or less.

Thus, the effects described above are more significantly exhibited.

The thickness of the base is not particularly limited, but is preferably 30 nm or more and 260 µm or less, more preferably 70 nm or more and 210 µm or less, and even more preferably 110 nm or more and 170 µm or less.

Thus, it is possible to particularly improve the workability, durability, reliability, and the like of the decorative laminate 100 while achieving a reduction in the thickness of the decorative laminate 100.

### <Adhesive Layer (First Adhesive Layer)>

In this embodiment, the adhesive layer (first adhesive layer) 6 having a function of bonding the transparent film 1 provided with the printed layer 3 and the shielding layer 4 is provided between the transparent film and the shielding layer.

Thus, the adhesion between the transparent film 1 provided with the printed layer 3 and the shielding layer 4 can be improved, and the durability of the decorative laminate 100 can be improved. In addition, the decorative laminate 100 can be produced under relatively mild production conditions (temperature, pressure, and the like) . Therefore, it is possible to effectively prevent unintended deterioration of the constituent material of the decorative laminate 100 and improve the reliability of the decorative laminate 100, and it is also advantageous from the viewpoint of production equipment, production cost, energy saving, and the like. Further, the decorative laminate 100 can be more easily produced, and the productivity of the decorative laminate 100 can be improved.

Examples of the adhesive constituting the adhesive layer 6 include acrylic adhesives, urethane-based adhesives, silicone-based adhesives, thermoplastic polyimide adhesives such as polyimide, polyimide amide, polyimide amide ether, polyester imide, and polyimide ether, various hot melt adhesives (polyester-based and modified olefin-based adhesives), polyvinyl acetate (VA), and polyethylene vinyl acetate (EVA)-based adhesives.

In addition, the adhesive layer 6 may be a solid content of the thermoplastic resin emulsion.

Thus, the adhesion between the transparent film 1 provided with the printed layer 3 and the shielding layer 4 can be particularly improved. As a result, the durability of the decorative laminate 100 can be particularly improved, and the workability of the decorative laminate 100 can be particularly improved.

In the following description, a case where the adhesive layer 6 contains the solid content of the thermoplastic resin emulsion will be mainly described.

In the specification, the thermoplastic resin emulsion means a raw material which is in an emulsion state by dispersing the thermoplastic resin in a solvent.

In addition, the solid content of the thermoplastic resin emulsion means a component obtained by removing the solvent from the thermoplastic resin emulsion.

The solid content of the thermoplastic resin emulsion includes a component present as emulsion resin particles, has adhesive properties with various materials (various resin materials, colorants, and the like), and imparts flexibility to the decorative laminate 100. As a result, the adhesion (adhesive strength) between the transparent film 1 provided with the printed layer 3 and the shielding layer 4 can be improved, and the bending workability of the decorative laminate 100 can be improved.

The solid content of the thermoplastic resin emulsion is not particularly limited, and examples thereof include emulsion particles of thermoplastic resins such as acrylic resins, urethane resins, vinyl acetate-based copolymers, urethane-acrylic composite particles, styrene-butadiene rubber (SBR), and nitrile rubber (NBR). Among these, urethane-acrylic composite particles are preferable.

In the specification, the urethane-acrylic composite particles mean particles having a heterogeneous phase structure of acrylic resin and urethane resin in a single particle thereof.

Each of the urethane resin and the acrylic resin has a high adhesive strength with respect to the transparent film 1, the shielding layer 4, and the core layer 5 described later. Therefore, by using the urethane-acrylic composite particles, good adhesive strength with the transparent film 1, the shielding layer 4, and the core layer 5 can be exhibited. Further, urethane resin has particularly excellent toughness, elasticity, and flexibility, and acrylic resin has particularly excellent transparency, durability, weather resistance, chemical resistance, and film formability.

In addition, in the specification, the "heterogeneous phase structure" means a structure in which a plurality of phases are present that are formed of different types of resins within a single particle, and examples thereof include a core-shell structure, a local structure, and a sea-island structure.

The arrangement state of a plurality of urethane-acrylic composite particles in the adhesive layer 6 is not particularly limited, and examples thereof include a linear structure. The particle structure and inter-particle arrangement can be confirmed with, for example, a scanning electron microscope (SEM) .

Among these particles, the above-mentioned urethane-acrylic composite particles are particularly preferable as an aqueous clear type having a core-shell structure having an acrylic component as a core and a urethane component as a shell.

In a case where the urethane-acrylic composite particles have the above-mentioned core-shell structure, the surface exterior portion of the adhesive layer 6 has a urethane composition. Therefore, the adhesive layer 6 has the properties of both the urethane resin and the acrylic resin while the properties of the urethane resin are imparted to the exterior portion.

In the specification, the "aqueous clear" means an aqueous resin solution in which the resin liquid is water-soluble while the coated film obtained after evaporating the moisture is non-water-soluble, and has transparency to a degree that the color and pattern of the substrate can be clearly distinguished.

Since the urethane-acrylic composite particles are the aqueous clear type, it is possible to more effectively prevent and suppress the adverse effect of the adhesive layer 6 on the external appearance of the decorative laminate 100.

In the solid content of the thermoplastic resin emulsion, one of the thermoplastic resins mentioned above can be used alone, or two or more different thermoplastic resins can be mixed and used.

In addition to the emulsion particles of the thermoplastic resin, the solid content of the thermoplastic resin emulsion may also contain a small amount of a thickener, a penetration accelerators, an antifoaming agent, and the like as necessary.

The solid content of the thermoplastic resin emulsion preferably contains emulsion resin particles having an average particle diameter of 30 nm or more and 10 µm or less, and the average particle size of the emulsion resin particles is more preferably 60 nm or more and 5 µm or less.

Thus, while the adhesion between the transparent film 1 provided with the printed layer 3 and the shielding layer 4 can be further improved, the flexibility of the decorative laminate 100 can be further improved.

In the present invention, the average particle diameter refers to a volume-based average particle diameter unless otherwise specified.

Here, the particle diameter can be measured by subjecting the target particles in water to an ultrasonic treatment for 1 minute using a laser diffraction particle size distribution analyzer SALD-7000 (manufactured by Shimadzu Corporation) and dispersing the target particles in water.

In addition, the solid content of the thermoplastic resin emulsion is preferably non-water-soluble.

Thus, when the decorative laminate 100 is produced, the thermoplastic resin emulsion containing water as a dispersion medium can be suitably used. As a result, it is possible to reduce the production cost of the decorative laminate 100 and the load on the environment.

In addition, in the specification, the non-water-soluble means that the solubility in water is less than 0.5 g/100 g water at 25°C, and the water-soluble means that the solubility in water is 0.5 g/100 g water or more at 25°C.

### <Core Material (Core Layer)>

The decorative laminate 100 of the embodiment further includes a core material (core layer) 5 on the surface side of the shielding layer 4 opposite to the surface facing the printed layer 3.

Thus, the shape stability, heat resistance, and durability of the decorative laminate 100 can be particularly improved.

The core material (core layer) 5 is constituted of, for example, a chemical fiber base material. In addition, the core layer 5 may be constituted of a phenolic resin, a metal material, or the like.

The material (material) of the chemical fiber base material used for the core layer 5 is not particularly limited, and examples thereof include synthetic fibers, semi-synthetic fibers, regenerated fibers, and inorganic fibers. More specific examples of the material of the chemical fiber base material used for the core layer 5 include polyamide-based resin fibers such as a polybenzoxazole resin fiber, a polyamide resin fiber, an aromatic polyamide resin fiber, and a wholly aromatic polyamide (aramid) resin fiber, polyester resin fibers such as a polyester resin fiber, an aromatic polyester resin fiber, and a wholly aromatic polyester resin fiber, polyimide resin fibers, fluororesin fibers, glass fibers, carbon fibers, ceramic fibers, and metal fibers (stainless fibers).

Among these, the core layer 5 preferably contains glass fibers.

Thus, the shape stability, heat resistance, and durability of the decorative laminate 100 can be further improved.

The core layer 5 containing glass fibers is not particularly limited, and examples thereof include a glass cloth, and a glass nonwoven fabric. Among these, a glass cloth is preferable from the viewpoint of non-combustibility and strength.

The glass cloth is not particularly limited, and examples thereof include plain weave, twill weave, satin weave, leno weave, imitation weave, twill weave, and double weave. Among these, a plain weave glass cloth is preferable from the viewpoint of material cost and workability.

Examples of glass constituting the glass cloth include E glass, C glass, A glass, S glass, D glass, NE glass, T glass, and H glass.

Among these, in a case where T glass is used, the coefficient of thermal expansion of the glass cloth can be lowered. In addition, in a case where E glass is used, the production cost of the decorative laminate 100 can be further reduced while a sufficient function is secured.

Although the weight of the glass cloth is not particularly limited, the weight of the aforementioned glass cloth is preferably a basis weight of 80 g/m² or more in a case it is necessary to satisfy non-combustibility compatibility requirements of Article 2, Item 9 of the Building Standard Law which states that "non-combustible materials must not contain cracks or holes following combustion". In addition, although there are no particular limitations thereon, the upper limit of weight is preferably a basis weight of 250 g/m² or less from the viewpoint of material cost and workability.

Further, the core layer 5 may be a prepreg having a glass cloth as a base material as described above.

Thus, the heat resistance, rigidity, and the like of the decorative laminate 100 can be particularly improved.

The prepreg is not particularly limited, and for example, the prepreg can be obtained by impregnating the above-mentioned glass cloth with a resin composition containing a thermoplastic resin, a thermosetting resin, or the like.

Although the content of the resin composition contained in the prepreg is not particularly limited as long as the interlayer adhesive strength between the shielding layer 4 and the core layer 5 is sufficient for forming the decorative laminate 100. In a case where a thermoplastic resin is used as the resin composition, the solid content of the prepreg is preferably 1% by mass or more and 20% by mass or less, and more preferably 1% by mass or more and 10% by mass or less. In addition, in a case where a thermosetting resin is used as the resin composition, the solid content in the prepreg is preferably 1% by mass or more and 20% by mass or less, and more preferably 2% by mass or more and 10% by mass or less. Thus, the interlayer adhesive strength between the shielding layer 4 and the core layer 5 can be improved.

Examples of the thermoplastic resin include an acrylic resin, an urethane resin, an ethylene vinyl acetate resin, and a styrene-butadiene rubber (SBR). Among these, an acrylic resin and an urethane resin are preferably used.

Examples of the thermosetting resin include a phenol resin, an epoxy resin, an oxetane resin, a (meth)acrylate resin, an unsaturated polyester resin, a diallyl phthalate resin, a urea resin, and a maleimide resin. Among these, a phenol resin is preferable from the viewpoint of non-combustibility, heat resistance, and adhesion. These resins may be used alone or in combination of two or more thereof.

The prepreg can be produced by a conventionally known method. For example, a prepreg is obtained by impregnating a glass cloth similar to the glass cloth described above with a varnish obtained by dissolving the resin in a solvent followed by drying.

The core layer 5 may have a structure in which a plurality of layers are laminated. Such a core layer 5 is obtained as follows, for example. First, fibrous base materials (for example, base materials constituted of paper such as kraft paper) are impregnated with a phenolic resin to obtain a plurality of members . Next, the core layer 5 can be obtained by laminating and bonding the plurality of members.

Examples of the metal material used for the core layer 5 include iron (Fe), aluminum (Al), zinc (Zn), nickel (Ni), bismuth (Bi), copper (Cu), silver (Ag), gold (Au), platinum (Pt), and alloys containing at least one of these metal materials. Among these, aluminum is preferable.

Thus, the non-combustibility of the decorative laminate 100 can be particularly improved. In addition, from the viewpoint of weight reduction, cost reduction, and prevention of warpage, the use of the metal material is advantageous.

The thickness of the core layer 5 is preferably 80 µm or more.

Thus, sufficient heat resistance and non-combustibility can be imparted to the decorative laminate 100. In addition, the upper limit of the thickness of the core layer 5 is not particularly limited. However, as the thickness of the core layer 5 increases, the thickness and weight of the decorative laminate 100 increase and the cost also increases. Therefore, it is preferable to set the thickness of the core layer 5 in an allowable range in the design of the final product. From such a viewpoint, the thickness of the core layer 5 is more preferably 500 µm or less.

### <Adhesive Layer (Second Adhesive Layer)>

In the embodiment, the adhesive layer (second adhesive layer) 7 having a function of bonding the shielding layer 4 and the core layer 5 is provided between the shielding layer 4 and the core layer 5.

Thus, the adhesion between the shielding layer 4 and the core layer 5 can be improved, and the durability of the decorative laminate 100 can be improved. In addition, the decorative laminate 100 can be produced under relatively mild production conditions (temperature, pressure, and the like). Therefore, it is possible to effectively prevent unintended deterioration of the constituent material of the decorative laminate 100 and improve the reliability of the decorative laminate 100, and it is also advantageous from the viewpoint of production equipment, production cost, energy saving, and the like. Further, the decorative laminate 100 can be more easily produced, and the productivity of the decorative laminate 100 can be improved.

The adhesive layer 7 preferably satisfies the same conditions as those described above for the adhesive layer 6, but the adhesive layer 7 and the adhesive layer 6 do not have to satisfy the same conditions.

The decorative laminate 100 has a total thickness (average thickness) of preferably 0.1 mm or more and 2 mm or less, and more preferably 0.1 mm or more and 1.2 mm or less.

Thus, it is possible to obtain the decorative laminate 100 having sufficient strength and particularly excellent workability and handleability.

### [Second Embodiment]

FIG. 2 is a cross-sectional view schematically showing a second embodiment of the decorative laminate according to the present invention. In the following description, differences from the above-described embodiment will be mainly described, and the description of the same will be omitted.

As shown in FIG. 2, in the decorative laminate 100 according to the embodiment, a coating layer (hard resin layer) 2 constituted of a hard resin material, a printed layer 3, a transparent film (transparent base material) 1, and an adhesive layer 6, a shielding layer 4, an adhesive layer 7, and a core material (core layer) 5 are laminated in this order.

That is, while the printed layer 3 is disposed on the second surface 12 side of the transparent film 1 in the decorative laminate 100 of the above-described embodiment, in the decorative laminate 100 of the embodiment, the printed layer 3 is disposed on the first surface 11 side of the transparent film 1.

With such a configuration, the printed layer 3 is disposed on a side closer to the viewpoint of an observer, and the color and pattern of the printed layer 3 becomes clearer. Therefore, it is possible to provide the decorative laminate 100 having further excellent aesthetics. Further, the transparent film 1 having a predetermined thickness is interposed between the printed layer 3 and the shielding layer 4. Due to the printed layer 3 and the shielding layer 4 as described above, it is possible to give a feeling of depth to the external appearance of the decorative laminate 100, and to provide the decorative laminate 100 having an external appearance full of a three-dimensional effect.

### [Third Embodiment]

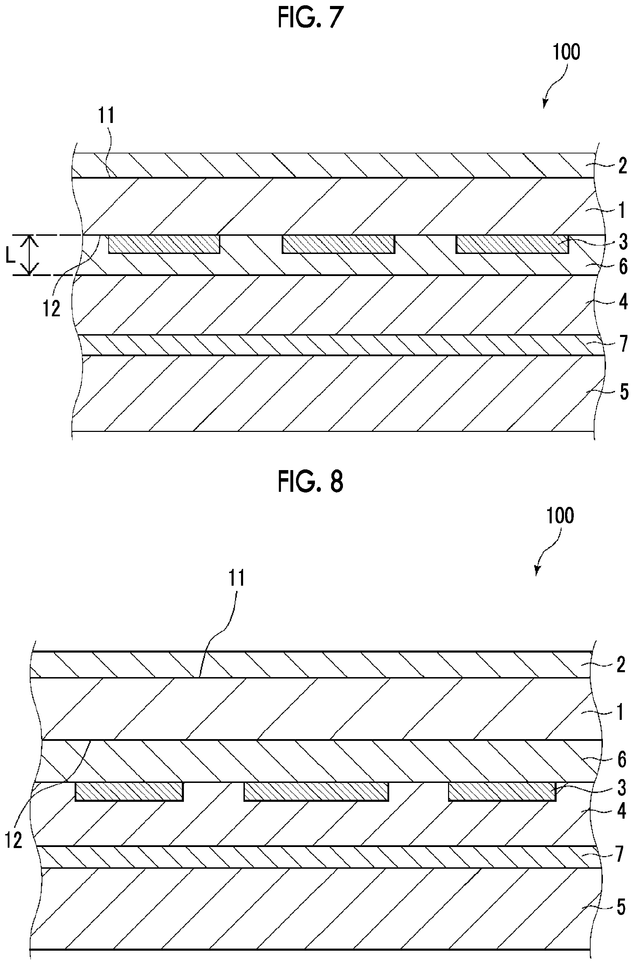

FIG. 7 is a cross-sectional view schematically showing a third embodiment of the decorative laminate according to the present invention. In the following description, differences from the above-described embodiment will be mainly described, and the description of the same will be omitted.

As shown in FIG. 7, in the decorative laminate 100 of the embodiment, a coating layer (hard resin layer) 2 constituted of a hard resin material, a transparent film (transparent base material) 1, a printed layer 3, a gap layer 6, a shielding layer 4, an adhesive layer 7, and a core material (core layer) 5 are laminated in this order.

In other words, the decorative laminate 100 includes a transparent film 1, a coating layer 2 constituted of a hard resin material and disposed on a first surface 11 side, which is one surface of the transparent film 1, a printed layer 3 provided on a second surface 12 side of the transparent film 1, which is a surface opposite to the first surface 11, a shielding layer 4 provided on a surface side opposite to the surface of the printed layer 3 facing the transparent film 1, and a gap layer 6 provided between the printed layer 3 and the shielding layer 4.

That is, the gap layer 6 having a function of providing a predetermined gap between the printed layer 3 and the shielding layer 4 is provided between the transparent film 1 provided with the printed layer 3 and the shielding layer 4.

As a result, a visual effect that the printed layer 3 is more raised to the viewpoint side of an observer than the shielding layer 4 is obtained, and an excellent external appearance full of a three-dimensional effect can be obtained.

The gap layer 6 may have a function of providing a predetermined gap between the printed layer 3 and the shielding layer 4, but the gap layer 6 is preferably an adhesive layer for bonding the transparent film 1 provided with the printed layer 3 and the shielding layer 4. That is, the gap layer 6 is preferably constituted of a cured product of an adhesive.

Note that the gap layer may not have a function as an adhesive layer. In this case, an adhesive layer may be provided between the transparent film 1, the gap layer 6, and the shielding layer 4.

Here, it is preferable that a gap length L from the surface of the printed layer 3 to the surface of the shielding layer 4 in a case of being observed from the coating layer 2 side is 1 µm or more and 50 µm or less. That is, the gap length L from the surface of the printed layer 3 facing the transparent film 1 to the surface of the shielding layer 4 facing the transparent film 1 is preferably 1 µm or more and 50 µm or less. Thus, it is possible to obtain a decorative laminate 100 having an excellent external appearance full of a three-dimensional effect.

Further, even with such a configuration, the pattern of the printed layer 3 can be suitably reflected on the external appearance of the decorative laminate 100 while exhibiting the features of the hard resin material, such as scratch resistance and antifouling properties, and thus a decorative laminate 100 having excellent aesthetics can be provided. In particular, regardless of a construction portion of the decorative laminate 100 (a substrate of the decorative laminate 100), excellent aesthetics can be stably exhibited. Accordingly, it is possible to provide a decorative laminate 100 having excellent aesthetics and excellent scratch resistance (difficulty of scratching) and antifouling properties (difficulty of adhesion of stains and ease of stain removal). In addition, by providing the printed layer 3 together with the shielding layer 4, it is possible to express various patterns and color tones and to provide a decorative laminate 100 having particularly excellent aesthetics. In particular, by providing the gap layer 6 having a predetermined gap length L, it is possible to obtain a decorative laminate 100 having an excellent external appearance full of a three-dimensional effect.

On the other hand, in a case where the above conditions are not satisfied, the above excellent effect cannot be obtained.

On the other hand, as long as the above conditions are satisfied, compared to a case where the printed layer 3 is disposed on the first surface 11 side of the transparent film 1 (the surface on which the coating layer 2 is provided), the following effect can also be obtained. That is, even in a case where the coating layer 2 is worn due to friction, it is possible to prevent the printed layer 3 from being damaged and to maintain an excellent external appearance. In other words, it can be said that the decorative laminate 100 satisfying the above conditions has sufficiently excellent wear resistance.

In addition, in a case where the shielding layer 4 is not provided, the visibility of the printed layer 3 and the aesthetics of the decorative laminate 100 may be deteriorated depending on the substrate of the decorative laminate 100.

In a case where the gap length from the surface of the printed layer 3 to the surface of the shielding layer 4 is less than the lower limit value, the adhesion between the transparent film 1 provided with the printed layer 3 and the shielding layer 4 is decreased. As a result, it is not possible to provide a decorative laminate 100 having sufficiently excellent durability. Further, the three-dimensional effect of the pattern of the printed layer 3 is reduced, and thus a decorative laminate 100 having sufficiently excellent aesthetics cannot be provided.

In a case where the gap length from the surface of the printed layer 3 to the surface of the shielding layer 4 is more than the upper limit value, the strength of the decorative laminate 100 against indentation deformation cannot be maintained. As a result, it is not possible to provide a decorative laminate 100 having sufficiently excellent durability. In addition, the impression that the pattern of the printed layer 3 is unnaturally raised may be given to an observer, and the aesthetics of the decorative laminate 100 may be deteriorated.

As described above, the gap length L is preferably 1 µm or more and 50 µm or less, more preferably 3 µm or more and 30 µm or less, and particularly preferably 10 µm or more and 20 µm or less.

Thus, the effects described above are more significantly exhibited.

### [Fourth Embodiment]

FIG. 8 is a sectional view schematically showing a fourth embodiment of the decorative laminate according to the present invention. In the following description, differences from the above-described embodiment will be mainly described, and the description of the same will be omitted.

As shown in FIG. 8, in the decorative laminate 100 according to the embodiment, a coating layer (hard resin layer) 2 constituted of a hard resin material, a transparent film (transparent base material) 1, an adhesive layer 6, a shielding layer 4 provided with a printed layer 3, an adhesive layer 7, and a core material (core layer) 5 are laminated in this order.

In other words, the decorative laminate 100 includes a transparent film 1, a coating layer 2 constituted of a hard resin material and disposed on a first surface 11 side, which is one surface of the transparent film 1, a shielding layer 4 provided on a second surface 12 side of the transparent film 1, which is a surface opposite to the first surface 11, a printed layer 3 provided on a surface of the shielding layer 4 facing the transparent film 1, and an adhesive layer 6 provided between the transparent film 1 and the shielding layer 4 provided with the printed layer 3.

With such a configuration, while exhibiting the features of the hard resin material, such as scratch resistance (difficulty of scratching) and antifouling properties, regardless of the construction portion of the decorative laminate 100 (the substrate of the decorative laminate 100), it is possible to suitably reflect the pattern of the printed layer 3 on the external appearance of the decorative laminate 100 and to provide a decorative laminate 100 that can stably exhibit excellent aesthetics. In particular, by providing the printed layer 3 on the shielding layer 4, compared with a case where another structure is provided between the printed layer and the shielding layer, the pattern of the printed layer 3 has excellent contrast and is clearly recognized by an observer. As a result, it is possible to provide a decorative laminate 100 having particularly excellent aesthetics. In addition, in the embodiment, the shielding layer 4 provided with the printed layer 3 is bonded to the transparent film 1 by the adhesive layer 6. Therefore, unintended peeling between the printed layer 3 and the transparent film 1 is effectively prevented. Accordingly, it is possible to provide a decorative laminate 100 having excellent aesthetics and excellent durability and antifouling properties (difficulty of adhesion of stains and ease of stain removal) . In addition, by providing the printed layer 3 together with the shielding layer 4, it is possible to express various patterns and color tones and to provide a decorative laminate 100 having particularly excellent aesthetics. Further, since the transparent film 1 not having an ink receiving layer can be suitably used and a so-called mat type sheet can be used as the shielding layer 4, the thickness of the decorative laminate 100 can be reduced.

In the configuration shown in the drawing, the printed layer 3 is selectively provided on only a part of the surface of the shielding layer 4 facing the transparent film 1, but the present invention is not limited thereto. For example, the printed layer 3 may be provided over the entire surface of the shielding layer 4 facing the transparent film 1 as long as at least a part of the reflected light from the shielding layer 4 can be transmitted.

In addition, in the configuration shown in the drawing, the printed layer 3 is formed by impregnation of the inside of the shielding layer 4 (ink receiving layer), but the present invention is not limited thereto. For example, the printed layer 3 may be carried on the surface of the shielding layer 4.

### <<<Method for Producing Decorative Laminate>>

Next, a method for producing the above-mentioned decorative laminate will be described.

### [First Embodiment of Production Method]

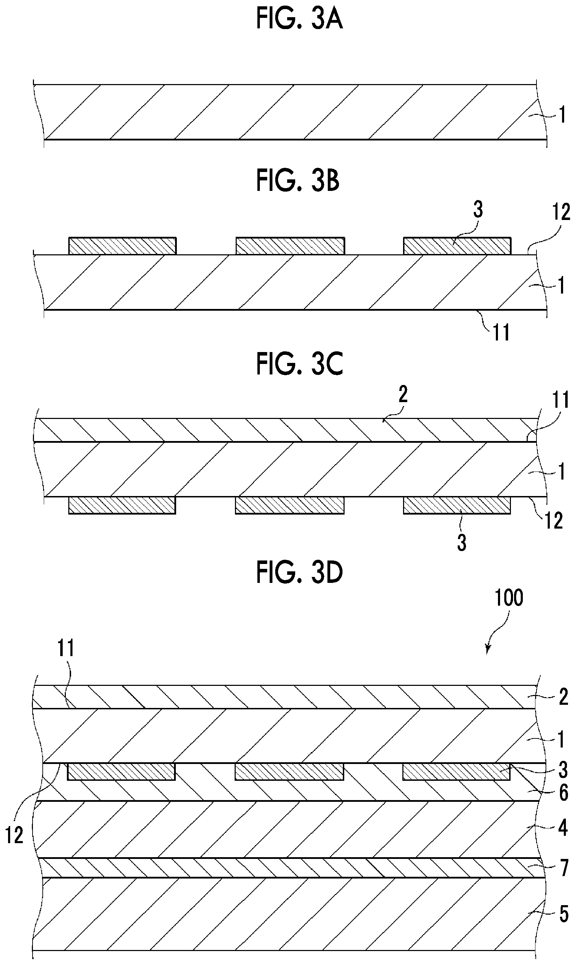

FIGS. 3A to 3D are cross-sectional views showing a first embodiment of the method for producing the decorative laminate of the present invention.

As shown in FIGS. 3A to 3D, the production method of the embodiment has a transparent film preparation step (3A) of preparing a transparent film 1, a printing step (3B) of forming a printed layer 3 on one surface (second surface 12) of the transparent film 1, a coating layer formation step (3C) of forming a coating layer 2 on the other surface (first surface 11) of the transparent film 1, and a bonding step (3D) of bonding the transparent film 1 provided with the printed layer 3 and a shielding layer 4 by forming an adhesive layer 6 on one surface of the shielding layer 4, and bonding the shielding layer 4 and a core layer 5 by forming an adhesive layer 7 on the other surface of the shielding layer 4 (a surface on the side opposite to the surface facing the transparent film 1).

### <Transparent Film Preparation Step>

In the transparent film preparation step, a transparent film 1 as described above is prepared (3A).

As the transparent film 1, for example, a film having an area corresponding to a decorative laminate 100 to be produced can be used. In this step, for example, a long film wound in a roll shape can be used. The film may be cut into a predetermined length during or after this step.

The transparent film 1 prepared in this step may include an ink receiving layer that absorbs the ink used for forming the printed layer 3 on the second surface 12, for example.

In addition, for example, the second surface 12 of the transparent film 1 prepared in this step may be subjected to various surface treatments (surface activation treatments) such as a plasma treatment, an ultraviolet irradiation treatment, and a primer treatment, before the subsequent printing step.

Thus, it is possible to particularly improve the adhesion between the transparent film 1 and a layer provided on the transparent film 1 (for example, the printed layer 3 or the shielding layer 4 via the adhesive layer 6).

In addition, the first surface 11 of the transparent film 1 may be subjected to the same surface treatment as described above before the subsequent coating layer formation step.

Thus, the adhesion between the transparent film 1 and the coating layer 2 can be particularly improved.

### <Printing Step>

Next, an ink is applied to the second surface 12 of the transparent film 1 prepared in the above step to form the printed layer 3 (3B).

The ink can be applied to the transparent film 1 by various printing methods such as an ink jet method, a screen printing method, a gravure printing method, and a pad printing method.

By applying the ink using the ink jet method, the preparation of a plate becomes unnecessary, and printed layers 3 of various patterns can be suitably formed in a short period of time. Therefore, it is possible to suitably provide various decorative laminates 100.

In addition, since fine pattern adjustment or the like can be suitably handled, it is possible to accurately meet the demand of a consumer.

In addition, in this step, as the ink, an ink containing a component (a solvent or the like) that dissolves or swells a part of the transparent film 1 (a region near the surface where the ink is applied) may be used.

Thus, the applied ink can be suitably attached to a target portion of the transparent film 1, and cissing and excessive wetting and spreading of the ink on the transparent film 1 can be effectively prevented. As a result, the printed layer 3 having a desired pattern can be easily and reliably formed. Further, since the formed printed layer 3 is firmly bonded to the transparent film 1, the adhesion of the printed layer 3 to the transparent film 1 can be improved, and the durability of the finally obtained decorative laminate 100 can be particularly improved.

In this step, plural kinds of inks may be used.

Thus, for example, the color reproduction range can be expanded, and delicate gradation expression can be more suitably performed.

The ink used for forming the printed layer 3 will be described in detail later.

### <Coating Layer Formation Step>

Next, the coating layer 2 is formed on the surface (first surface 11) side opposite to the surface (second surface 12) of the transparent film 1 on which the printed layer 3 is provided (3C) .

The coating layer 2 is formed as follows, for example. That is, a composition for forming a coating layer is applied to the first surface 11 side of the transparent film 1 by various methods such as a dipping method, a spray method, coating methods using various coaters such as a kiss coater, a comma coater, a roll coater, a knife coater, and a blade coater, and various printing methods. Thereafter, by conducting a curing reaction, the coating layer 2 can be suitably formed on the first surface 11.

The composition used for forming the coating layer 2 (composition for forming a coating layer) will be described in detail later.

The coating layer 2 may be formed by bonding a member for forming a coating layer formed into a sheet shape to the first surface 11 side of the transparent film 1.

The member for forming a coating layer and the transparent film 1 can be bonded by, for example, pressure bonding.

In a case where the member for forming a coating layer and the transparent film 1 are bonded by pressure bonding, the bonding between the member for forming a coating layer and the transparent film 1 may be performed by, for example, heating the transparent film 1 and the member for forming a coating layer during the pressure bonding.

Thus, the productivity of the decorative laminate 100 can be particularly improved, and the bonding strength between the transparent film 1 and the coating layer 2 can be particularly improved. In addition, for example, the polymerization reaction of the components contained in the coating layer 2 can be allowed to suitably proceed. Therefore, the hardness of the coating layer 2 and the durability and reliability of the decorative laminate 100 can be particularly improved.

In addition, when the member for forming a coating layer and the transparent film 1 are bonded, a mirror-finished plate is superposed on the outer surface of the member for forming a coating layer (the surface on the side opposite to the surface facing the transparent film 1) to perform mirror finish. In addition, during the bonding, embossing finish can be performed by superposing an embossing plate, an embossing film, or the like on the outer surface side of the member for forming a coating layer.

In a case where the coating layer 2 is constituted of a curable resin, the polymerization reaction of the coating layer 2 formed in this step may not be completed. Even in such a case, the polymerization reaction of the constituent components of the coating layer 2 can be allowed to proceed in the subsequent step, and the durability, reliability, and the like of the finally obtained decorative laminate 100 can be particularly improved.

### <Bonding Step>

Next, the adhesive layer 6 is formed on one surface of the shielding layer 4, and the transparent film 1 provided with the printed layer 3 and the shielding layer 4 are bonded. In addition, the adhesive layer 7 is formed on the other surface of the shielding layer 4 (the surface opposite to the surface facing the transparent film 1) and the shielding layer 4 and the core material (core layer) 5 are bonded (3D).

Thus, a decorative laminate 100 is obtained.

The shielding layer 4 is constituted of the above-mentioned material, and can be formed using, for example, a white polyethylene terephthalate film (white PET film).

The adhesive layer 6 can be suitably formed by applying a composition for forming an adhesive layer to at least one of the transparent film 1 provided with the printed layer 3 and the shielding layer 4 by various methods such as a dipping method, a spray method, coating methods using various coaters such as a kiss coater, a comma coater, a roll coater, a knife coater, and a blade coater, and various printing methods. In addition, the adhesive layer 7 can be suitably formed on at least one of the core layer 5 and the shielding layer 4 by the same method as the method for forming the adhesive layer 6.

The core layer 5 and the shielding layer 4 can be bonded by, for example, in a case where the core layer 5 contains a resin material, melting and softening a part of the core layer 5.

The core layer 5 and the shielding layer 4 may be bonded by, for example, adhesion.

In addition, in a case of producing a decorative laminate 100 which does not have the core layer 5, the decorative laminate 100 can be produced by omitting a part of the above-described bonding step (core layer formation step).

### [Second Embodiment of Production Method]

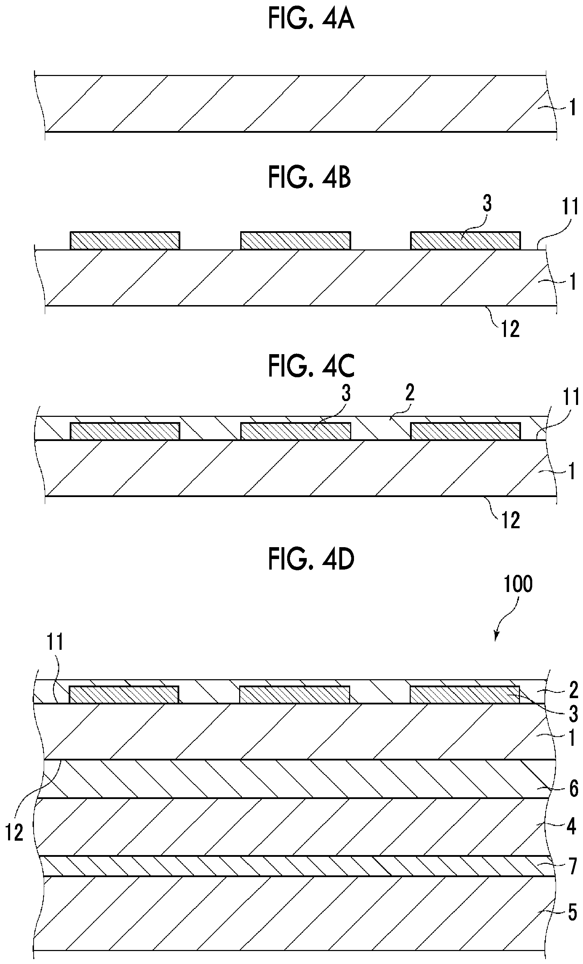

FIGS. 4A to 4D are cross-sectional views showing a second embodiment of the method for producing the decorative laminate according to the present invention. In the following description, differences between the production method described above and the first embodiment will be mainly described, and the description of the same will be omitted.

As shown in FIGS. 4A to 4D, the production method of the embodiment has a transparent film preparation step (4A) of preparing a transparent film 1, a printing step (4B) of forming a printed layer 3 on one surface (first surface 11) of the transparent film 1, a coating layer formation step (4C) of forming a coating layer 2 on the surface of the transparent film 1 on which the printed layer 3 is provided, and a bonding step (4D) of bonding the transparent film 1 provided with the printed layer 3 and a shielding layer 4 by forming an adhesive layer 6 on one surface of the shielding layer 4, and bonding the shielding layer 4 and a core layer 5 by forming an adhesive layer 7 on the other surface of the shielding layer 4 (a surface on the side opposite to the surface facing the transparent film 1).

That is, while the printed layer 3 is formed on the second surface 12 of the transparent film 1 in the production method of the first embodiment described above, the printed layer 3 is formed on the first surface 11 of the transparent film 1 in the manufacturing method of the embodiment.

### [Third Embodiment of Production Method]

Regarding the method for producing the decorative laminate 100 of the third embodiment described above, the differences from the first embodiment of the production method described above will be mainly described, and the description of the same will be omitted. While the adhesive layer 6 is formed on the surface of the shielding layer 4 in the first embodiment of the production method described above, the gap layer 6 is formed on the surface of the shielding layer 4 instead of the adhesive layer 6 in the embodiment. Thus, the decorative laminate 100 according to the third embodiment described above can be produced.

### [Fourth Embodiment of Production Method]

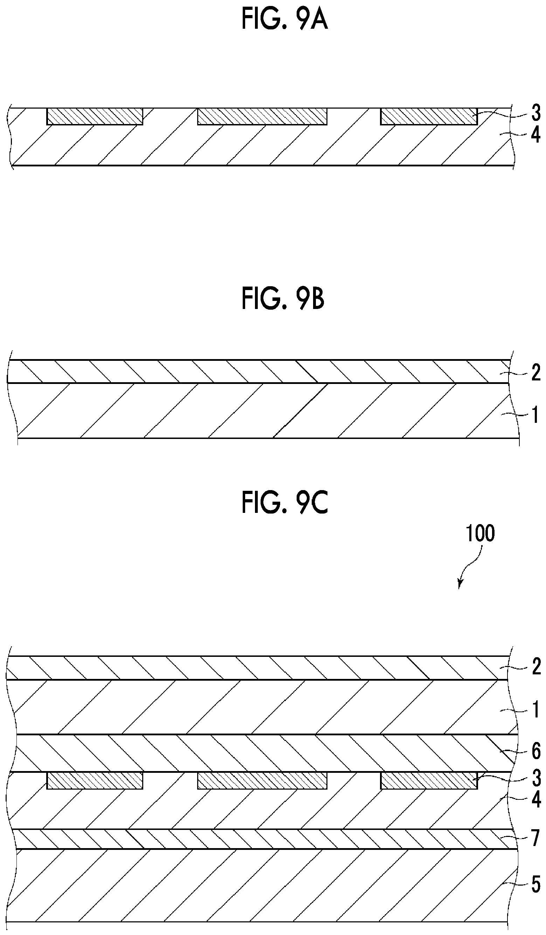

FIGS. 9A to 9C are cross-sectional views showing a fourth embodiment of the method for producing the decorative laminate according to the present invention. In the following description, differences from the embodiment of the production method described above will be mainly described, and the description of the same will be omitted.

As shown in FIGS. 9A to 9C, the production method of the embodiment has a printing step (9A) of forming a printed layer 3 on one surface of a shielding layer 4, a coating layer formation step (9B) of forming a coating layer 2 on one surface (first surface 11) of a transparent film 1, and a bonding step (9C) of bonding the transparent film 1 having the coating layer formed thereon and the shielding layer 4 provided with the printed layer 3 by forming an adhesive layer 6 on one surface of the shielding layer 4, and bonding a core layer 5 and the shielding layer 4 by forming an adhesive layer 7 on the other surface of the shielding layer 4. Among these steps, the printing step (9A) of forming the printed layer 3 on one surface of the shielding layer 4 will be described in detail.

### <Printing Step>

In the printing step of the embodiment, an ink is applied to one surface of the shielding layer 4 to form the printed layer 3 (9A).

As the shielding layer 4, for example, a film having an area corresponding to a decorative laminate 100 to be produced can be used. In addition, in this step, for example, a long sheet wound in a roll shape can be used. Note that the sheet may be cut into a predetermined length during or after this step.

Further, the shielding layer 4 used in this step may include, for example, an ink receiving layer that absorbs the ink used for forming the printed layer 3. Thus, as shown in FIGS. 9A to 9C, the printed layer 3 can be formed inside the shielding layer 4. As a result, it is possible to more reliably exhibit the above-described effects (to provide a decorative laminate 100 having excellent aesthetics, durability, and antifouling properties).

In addition, for example, the surface of the shielding layer 4 used in this step, on which the printed layer 3 is formed, is subjected to various surface treatments (surface activation treatments) such as a plasma treatment, an ultraviolet irradiation treatment, and a primer treatment, before printing.

Thus, the adhesion between the shielding layer 4 and the printed layer 3 and the adhesion between the shielding layer 4 and the transparent film 1 (the adhesion with the transparent film 1 via the adhesive layer 6) can be particularly improved.

Further, the surface of the shielding layer 4 on the side opposite to the surface on which the printed layer 3 is formed may be subjected to the same surface treatment as described above.

Thus, the adhesion between the shielding layer 4 and the core material 5 (the adhesion with the shielding layer 4 via the adhesive layer 7) can be particularly improved.

The ink can be applied to the shielding layer 4 in the same manner as in the application of the ink to the transparent film 1 in the first embodiment of the production method described above by various printing methods such as an ink jet method, a screen printing method, a gravure printing method, and a pad printing method.

By applying the ink using the ink jet method, the preparation of a plate becomes unnecessary, and printed layers 3 of various patterns can be suitably formed in a short period of time. Therefore, it is possible to suitably provide various decorative laminates 100.

In addition, since fine pattern adjustment or the like can be suitably handled, it is possible to accurately meet the demand of a consumer.

In this step, plural kinds of inks may be used.

Thus, for example, the color reproduction range can be expanded, and delicate gradation expression can be more suitably performed.

Hereinafter, the ink used for forming the printed layer 3 will be described in detail.

### <Ink>

The ink used for forming the printed layer 3 usually contains a colorant.

The constituent components of the ink will be described below.

### (Colorant)

The ink usually contains a colorant as a solid content.

As the colorant, for example, various pigments and various dyes can be used, and fluorescent materials, phosphorescent materials, and the like can also be used. Among these, it is preferable to use an ink containing a pigment as a colorant.

Thus, the durability of the decorative laminate 100 can be particularly improved.

In a case of using a plurality kinds of inks, for example, inks corresponding to three primary colors (cyan (indigo purple), magenta (red purple), and yellow) can be used.

In addition, for example, a black ink may be used in combination with a chromatic color ink.

Thus, it is possible to suitably express a dark color while suppressing the amount of ink used. Further, it is possible to obtain an effect of expressing a tight black color.

In addition, for example, a white ink may be used.

Thus, for example, the contrast and the like of the printed layer 3 formed of a chromatic ink can be particularly improved, and the decorative laminate 100 having particularly excellent aesthetics can be provided.

In particular, in a case of using an indigo purple pigment ink exhibiting indigo purple (cyan), it is preferable to use one or two or more pigments selected from the group consisting of C.I. Pigment Blue 15: 3, C.I. Pigment Blue 15: 2, and C.I. Pigment Blue 60 as a pigment constituting the ink.

Further, in a case of using a red purple (magenta) pigment ink exhibiting magenta, it is preferable to use one or two or more pigments selected from the group consisting of C.I. Pigment Violet 19, C.I. Pigment Red 122, and C.I. Pigment Violet 37 as a pigment constituting the ink.

In a case of using a yellow pigment ink exhibiting yellow, it is preferable to use one or two or more pigments selected from the group consisting of C.I. Pigment Yellow 150, C.I. Pigment Yellow 138, and C.I. Pigment Yellow 139 as a pigment forming the ink.

In a case of using a red pigment ink exhibiting red, it is preferable to use C.I. Pigment Red 177 and/or C.I. Pigment Red 254 as a pigment constituting the ink.

In a case of using a green pigment ink exhibiting green, it is preferable to use C.I. Pigment Green 36 and/or C.I. Pigment Green 58 as a pigment constituting the ink.

In a case of using a blue pigment ink exhibiting blue, it is preferable to use C.I. Pigment Blue 15: 6 as a pigment constituting the ink.

In a case of using a black pigment ink exhibiting black, it is preferable to use one or two or more selected from the group consisting of carbon black, iron black, manganese ferrite black, cobalt ferrite black, copper chrome black, and copper chrome manganese black as a pigment constituting the ink.

In a case of using a white pigment ink exhibiting white, as a pigment constituting the ink, titanium oxide, lead white, zinc white, lithopone, zinc sulfide, antimony oxide, calcium carbonate, kaolin, mica, barium sulfate, alumina, talc, silica, calcium silicate, gloss white, white plastic pigment, and the like can be used.

### (Solvent)

The ink may contain, for example, a solvent.

Thus, for example, the fluidity of the ink can be more satisfactorily adjusted, and the printed layer 3 having a desired pattern can be formed with higher accuracy.

Further, in a case where the ink contains a solvent having a function of dissolving or swelling the constituent material (for example, a resin material) of the transparent film 1 (the shielding layer 4 in a case where the shielding layer 4 is provided with the printed layer 3, the same applies hereinafter), the effect shown below can be exhibited. That is, in a case where the ink is applied to the transparent film 1, the ink is absorbed in a part of the transparent film 1 (a region near the surface to which the ink is applied), and the transparent film 1 can be partially dissolved or swollen. As a result, the formed printed layer 3 is firmly bonded to the transparent film 1, so that the adhesion of the printed layer 3 to the transparent film 1 can be further improved and the durability of the finally obtained decorative laminate 100 can be further improved. Further, the ink can be selectively absorbed in a desired portion of the transparent film 1. Therefore, it is possible to prevent cissing and excessive wetting and spreading of the ink on the transparent film 1, and to reliably prevent the pattern of the printed layer 3 from being disturbed. Accordingly, it is possible to more easily and more reliably form the printed layer 3 having a desired shape and pattern while reliably preventing the transparent film 1 from being deformed, and to more reliably improve the aesthetics and the like of the decorative laminate 100.

As the solvent, for example, alcohol compounds (such as monohydric alcohols such as methyl alcohol, ethyl alcohol, propyl alcohol, butyl alcohol, and isopropyl alcohol, polyhydric alcohols such as ethylene glycol and glycerin, and fluorides thereof), ketone compounds (such as acetone, methyl ethyl ketone, and cyclohexanone), carboxylic acid ester compounds (such as methyl acetate, ethyl acetate, propyl acetate, butyl acetate, methyl propionate, and ethyl propionate), ether compounds (such as diethyl ether, dipropyl ether, tetrahydrofuran, and dioxane), lactone compounds, and the like can be used.

In a case where the ink contains at least one compound selected from an alkylene glycol compound and a lactone compound as a solvent, for example, the storage stability of the ink and the jetting stability by the ink jet method can be particularly improved. In addition, since the solvent can be quickly removed from the ink after printing, the productivity of the decorative laminate 100 can be particularly improved.

Examples of the lactone compound that can be used as the solvent include γ-butyrolactone, δ-valerolactone, and ε-caprolactone.

Among these, the solvent may contain one or two or more selected from the group consisting of diethylene glycol dimethyl ether, diethylene glycol diethyl ether, tetraethylene glycol dimethyl ether, tetraethylene glycol dibutyl ether, and γ-butyrolactone. Thus, for example, the storage stability of the ink, the jetting stability by the ink jet method, and the like can be further improved.

Further, the ink may contain a liquid polymerizable compound (for example, a monomer or the like) as a solvent.

Thus, the adhesion of the printed layer 3 formed using the ink to the transparent film 1 can be particularly improved. In addition, for example, it is not necessary to use a volatile component (a component that is removed by volatilization in the production of the decorative laminate 100) as the solvent, and even in a case where the volatile component is used, the amount used can be suppressed. Therefore, the productivity of the decorative laminate 100 can be particularly improved.

As the liquid polymerizable compound, for example, various curable resins such as thermosetting resins and photocurable resins can be used. A photocurable resin is preferable, and an ultraviolet curable resin is more preferable.

By incorporating the photocurable resin (particularly, an ultraviolet curable resin) as a liquid polymerizable compound, it is possible to more easily and reliably cure the curable resin (photocurable resin) contained in the ink (to remove the liquid polymerizable compound) at an appropriate timing in the printing step described above. Therefore, the printed layer 3 having a desired shape and pattern can be more easily and reliably formed.

The liquid polymerizable compound (for example, a monomer) as the solvent will be described in detail later in the section "(Resin Material)".

### (Resin Material)

The ink may contain a resin material.

Thus, the adhesion of the printed layer 3 formed using the ink to the transparent film 1 can be particularly improved.

As the resin material, various thermoplastic resins, curable resin materials and the like can be used.

By using the thermoplastic resin, the adhesion between the transparent film 1 and the printed layer 3 can be particularly improved. In addition, the thermoplastic resin generally exhibits excellent solubility and dispersibility in the above-mentioned solvent. Therefore, it is possible to effectively prevent unintended compositional variations in the ink and the printed layer 3 to be formed, and particularly improve the storage stability of the ink and the reliability of the decorative laminate 100 to be produced. In addition, it is possible to particularly improve the jetting stability of the ink by the ink jet method.

In a case where the ink contains a curable resin material, the adhesion of the printed layer 3 formed using the ink to the transparent film 1 can be particularly improved.

In addition, in a case where the ink contains a photocurable resin (particularly, an ultraviolet curable resin), the following effect can be exhibited. That is, it is possible to more easily and reliably reduce the fluidity of the ink at an appropriate timing, and to easily and reliably form the printed layer 3 having a desired shape and pattern by adjusting the light irradiation timing and the like.

The photocurable resin may have a configuration in which a curing reaction (polymerization reaction) proceeds by irradiation with light. For example, a visible light curable resin in which a curing reaction (polymerization reaction) proceeds by irradiation with visible light, an ultraviolet curable resin in which a curing reaction (polymerization reaction) proceeds by irradiation with ultraviolet rays, or the like can be used. Among these, an ultraviolet curable resin in which a curing reaction (polymerization reaction) proceeds by irradiation with ultraviolet rays is preferable.

Thus, the reaction rate of the curing reaction of the photocurable resin can be particularly improved, and the productivity of the decorative laminate 100 can be particularly improved. In addition, a widely distributed ultraviolet lamp or the like can be used as a light source for the irradiation with ultraviolet rays. Therefore, a special light source is not required, the configuration of the production apparatus for the decorative laminate 100 can be simplified, and the production cost of the decorative laminate 100 can be suppressed. In addition, since the cured product of the ultraviolet curable resin generally has high transparency, it is possible to more effectively prevent the color tone of the printed layer 3 from being adversely affected.

It is preferable that the photocurable resin (polymerizable compound) is in a liquid state by itself and has a function of dissolving or swelling the resin material forming the transparent film 1, that is, a function as the solvent.

Thus, it is possible to sufficiently decrease the viscosity of the ink without using the volatile component that evaporates in the production process of the decorative laminate 100 as the solvent, and to suitably form the printed layer 3 by various printing methods (particularly, an ink jet method) . Accordingly, it is possible to prevent the deformation of the pattern due to the removal of the liquid component (volatile component), and to easily and reliably form the printed layer 3 having a desired shape and pattern.

As the photocurable resin (polymerizable compound), for example, various monomers, various oligomers (including dimers, trimers, and the like), prepolymers, and the like can be used, but it is preferable that the ink contains at least a monomer component as a photocurable resin (polymerizable compound) . The monomer is generally a low viscosity component compared with an oligomer component and the like. Therefore, the photocurable resin can function as the solvent. In addition, it is advantageous in that the jetting stability of the ink by the ink jet method is particularly improved.

Examples of the monomer as the photocurable resin (polymerizable compound) include acrylic monomers such as acrylic acid, methacrylic acid, esters thereof, and various derivatives (for example, compounds in which at least a part of hydrogen atoms are relaxed by other atoms or atomic groups) . These monomers can suitably function as the above-mentioned solvent.

### (Other Components)

The ink may contain components (other components) other than those components described above. Examples of such components include photopolymerization initiators, slip agents (leveling agents), dispersants, polymerization accelerators, polymerization inhibitors, penetration accelerators, wetting agents (moisturizers), fixing agents, fungicides, preservatives, antioxidants, chelating agents, thickeners, antifoaming agents, and sensitizers (sensitizing dyes).

The photopolymerization initiator is not particularly limited as long as the photopolymerization initiator generates active species such as radicals and cations upon irradiation with light to initiate the polymerization reaction of the photocurable resin (polymerizable compound). As the photopolymerization initiator, a photoradical polymerization initiator or a photocationic polymerization initiator can be used, but it is preferable to use a photoradical polymerization initiator. In a case of using a photopolymerization initiator, it is preferable that the photopolymerization initiator has an absorption peak in the ultraviolet region.

Examples of the photoradical polymerization initiator include aromatic ketones, acylphosphine oxide compounds, aromatic onium salt compounds, organic peroxides, thio compounds (such as a thioxanthone compound, and a thiophenyl group-containing compound), hexaarylbiimidazole compounds, ketoxime ester compounds, borate compounds, azinium compounds, metallocene compounds, active ester compounds, compounds having a carbon-halogen bond, and alkylamine compounds.

Among these, from the viewpoint of solubility in the photocurable resin (polymerizable compound) and curability, it is preferable to use at least one selected from an acylphosphine oxide compound and a thioxanthone compound and it is more preferable to use an acylphosphine oxide compound and a thioxanthone compound in combination.

Examples of the photoradical polymerization initiator include an acetophenone-based photoradical polymerization initiator, a benzoin-based photoradical polymerization initiator, a benzophenone-based photoradical polymerization initiator, a thioxanthone-based photoradical polymerization initiator, a ketone-based photoradical polymerization initiator, an imidazole-based photoradical polymerization initiator, an oxime ester-based photoradical initiator, a titanocene-based photoradical polymerization initiator, an acylphosphine oxide-based photoradical polymerization initiator, a trichloromethyltriazine-based photoradical polymerization initiator, and a carbazole-based photoradical polymerization initiator. As the photoradical polymerization initiator, one selected from these photoradical polymerization initiators can be used alone or two or more thereof can be used in combination.

In a case where the ink contains a slip agent, the smoothness of the surface of the printed layer 3 is improved by the leveling action.

The slip agent is not particularly limited, but for example, silicone-based surfactants such as polyester-modified silicone or polyether-modified silicone can be used, and polyether-modified polydimethylsiloxane or polyester-modified polydimethylsiloxane is preferably used.

In a case where the ink contains a dispersant, the dispersibility of the dispersoid such as a pigment can be improved, and the storage stability and the jetting stability of the ink can be particularly improved. The dispersant is not particularly limited, and examples thereof include polyoxyalkylene polyalkylene polyamine, vinyl-based polymers and copolymers, acrylic polymers and copolymers, polyester, polyamide, polyimide, polyurethane, amino-based polymers, silicon-containing polymers, sulfur-containing polymers, fluorine-containing polymers, and epoxy resins.

### <Composition for Forming Coating Layer>

Hereinafter, the composition for forming a coating layer used for forming the coating layer 2 will be described in detail.

### (Hard Material or Precursor Thereof)

The composition for forming a coating layer used for forming the coating layer 2 contains the above-mentioned hard resin material constituting the coating layer 2 and/or a precursor thereof.

### (Solvent)

The composition for forming a coating layer may contain a solvent. Thus, for example, a hard material and a precursor thereof can be dissolved and/or dispersed in the composition for forming a coating layer, ease of handling (habitability) of the composition for forming a coating layer can be improved, and the productivity of the decorative laminate 100 can be particularly improved. In addition, the adhesion between the transparent film 1 and the coating layer 2 can be particularly improved.

As the solvent contained in the composition for forming a coating layer, a polar solvent can be preferably used, and specific examples thereof include water; alcoholic solvents such as methanol, ethanol, and isopropanol; ketone-based solvents such as methyl ethyl ketone, and acetone; amide-based solvents such as dimethylformamide (DMF); ether-based solvents such as tetrahydrofuran (THF), and tetrahydropyran; and sulfoxide-based solvents such as dimethyl sulfoxide (DMSO).

Among these, it is preferable to use water as the solvent.

Thus, for example, in a case where the composition for forming a coating layer contains a precursor of the hard material, the precursor of the hard material can be uniformly dissolved in the composition for forming a coating layer, the hydrogen ion index (pH) can be easily controlled, and the occurrence of unintended variations in the hydrogen ion index (pH) in the composition for forming a coating layer can be effectively prevented. For this reason, the polymerization reaction can suitably proceed.

### (Other Components)

The composition for forming a coating layer may contain components (other components) other than those components described above. Examples of such components include catalysts such as various acidic substances and various basic substances, release agents, polymerization initiators, slip agents (leveling agents), dispersants, polymerization accelerators, polymerization inhibitors, penetration accelerators, wetting agents (moisturizers), colorants, fixing agents, fungicides, preservatives, antioxidants, chelating agents, thickeners, antifoaming agents, and sensitizers (sensitizing dyes).

Examples of the basic substance as a catalyst include sodium hydroxide, and potassium hydroxide.

Examples of the acidic substance as a catalyst include acetic acid, hydrogen chloride, sulfuric acid, nitric acid, and a latent acid catalyst such as diammonium imidodisulfonate.

Although the suitable embodiments of the present invention have been described above, the present invention is not limited to the above-described embodiments, and modifications, improvements, and the like within the scope that can achieve the object of the present invention are included in the present invention.

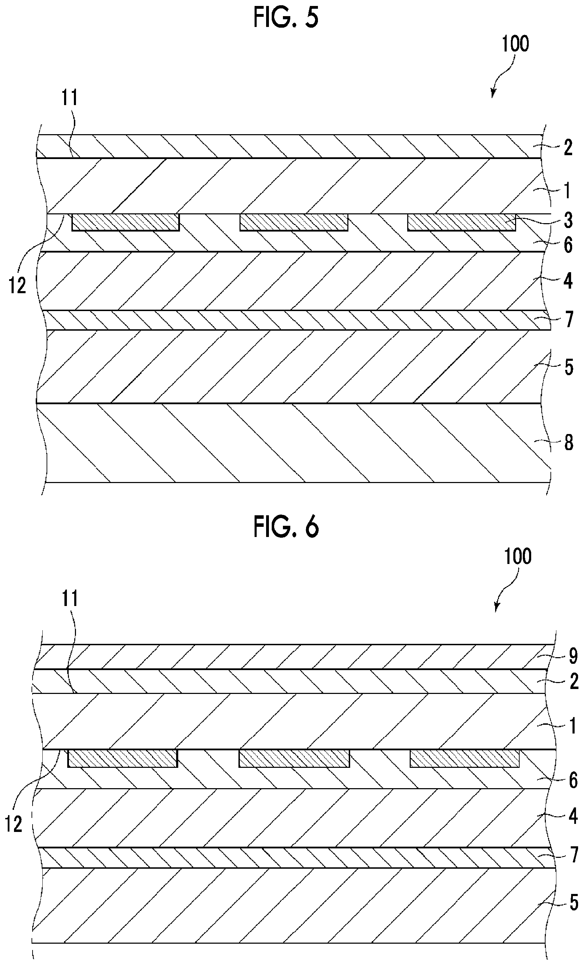

For example, the decorative laminate of the present invention is not limited to the embodiments of the decorative laminate 100 shown in FIGS. 1, 2, 7, and 8, and in a case where it is desired to impart mechanical strength, or the like, for example, as shown in FIG. 5, a support layer 8 may be further laminated below the core layer 5. In addition, the decorative laminate of the present invention may have a configuration having a protective layer 9 as an outermost layer on the design surface side as shown in FIG. 6, for example.

In addition, in the present invention, the decorative laminate may have at least one intermediate layer between the above-mentioned layers.

Further, in the above-described embodiments, the case where the decorative laminate has the core layer has been described as a representative, but the decorative laminate of the present invention may not have the core layer.

Further, in the above-described embodiments, the case where the decorative laminate has the adhesive layer (the first adhesive layer and the second adhesive layer) has been described as a representative, but the decorative laminate of the present invention may not have the adhesive layer (at least one of the first adhesive layer and the second adhesive layer).

The decorative laminate of the present invention may be produced by any method, and the method for producing the decorative laminate of the present invention is not limited to the above-described production methods.

For example, the order of the steps in the embodiments of the production method described above may be changed.

More specifically, for example, in the embodiments of the production method described above, the coating layer is formed after the printed layer is formed on the transparent film or the shielding layer. However, the coating layer may be formed before the printed layer is formed.

In the embodiments of the production method described above, the case where the bonding of the transparent film provided with the printed layer and the shielding layer and the formation of the core material (core layer) (bonding of the core material) are performed in the same step has been as a representative. In this regard, the bonding of the transparent film provided with the printed layer and the shielding layer and the formation of the core material (core layer) (bonding of the core material) may be performed in different steps. More specifically, for example, the formation of the core material (core layer) (bonding of the core material) may be performed after the transparent film provided with the printed layer and the shielding layer are bonded. In addition, the formation of the core material (core layer) (bonding of the core material) may be performed before the transparent film provided with the printed layer and the shielding layer are bonded.

Further, in the above-described embodiments, the case where the printed layer is formed on the transparent film and the case where the printed layer is formed on the shielding layer have been described respectively, but the printed layer may be formed on both of the transparent film and the shielding layer.

### Examples

Hereinafter, the present invention will be described in detail based on Examples and Comparative Examples, but the present invention is not limited thereto.

### [1A] Production of Decorative Laminate

### (Example 1A)

First, a polyethylene terephthalate film having an ink receiving layer was prepared as a transparent film. This transparent film had a thickness of 100 µm.

Next, a printed layer was formed on the surface of the transparent film on which the ink receiving layer was provided in a predetermined pattern (wood grain pattern) by an ink jet method.

In forming the printed layer, an ink containing a pigment and an acrylic resin as an ultraviolet curable resin was used. In addition, after the ink was jetted by the ink jet method, the ink landed on the transparent film was irradiated with ultraviolet rays to be cured. Thus, a printed layer was formed.

Next, a melamine-based resin (reaction molar ratio: 1.4, resin solid content: 50% by mass) was applied to the surface side of the transparent film opposite to the surface on which the printed layer was provided to form a coating film. Then, the coating film was dried for 90 seconds with a hot air dryer at 120°C to obtain a B-stage layer (a layer constituted of a material containing a B-stage curable resin (melamine-based resin)). The melamine-based resin was synthesized by the following method. First, raw material melamine and formalin were charged in a reaction vessel at a predetermined blending ratio, and a catalyst was added, followed by reacting while refluxing after raising the temperature to the boiling point. After confirming that the melamine dissolution was completed, a dehydration treatment was performed after having reached the reaction end point to prepare the resin solid content and cooling was performed. A melamine-based resin was synthesized by this method.

On the other hand, a white polyethylene terephthalate film (white PET film as a member to become a shielding layer) constituted of a material containing titanium oxide, and a substrate (a member to become a core layer) constituted of a core layer material formed of a prepreg containing a binder and a glass cloth as a base material were prepared. In addition, an emulsion of urethane-acrylic composite particles ("SU-100" manufactured by Chirika Co., Ltd., average particle diameter: 84 nm, dispersion medium: water) was applied to both surfaces of the white polyethylene terephthalate film to have a solid content of 10 g/m².

Next, the transparent film provided with the B-stage layer and the printed layer, the white polyethylene terephthalate film coated with the emulsion of urethane-acrylic composite particles, and the substrate containing a binder were laminated in this order to obtain a laminate. At this time, the transparent film provided with the B-stage layer and the printed layer was placed so that the surface on which the printed layer was provided faced the white polyethylene terephthalate film.

Thereafter, the obtained laminate was subjected to heated pressure molding under the conditions of a temperature of 140°C and a pressure of 2 MPa for 40 minutes. Thus, a decorative laminate (melamine decorative laminate) having a thickness of 0.3 mm formed by laminating the coating layer (thickness: 15 µm) constituted of a hard resin material, the transparent film (thickness: 100 µm), the printed layer, the first adhesive layer, the shielding layer (thickness: 50 µm), the second adhesive layer, and the core layer (thickness: 100 µm) in this order was obtained (refer to FIG. 1).

As the glass cloth, a glass cloth constituted of glass fibers of E glass and having a basis weight of 104 g/m² was used. In addition, the binder contained in the prepreg was an acrylic resin. In addition, the content of the binder with respect to the glass fiber (100 parts by mass) in the prepreg was 1.50 parts by mass.

### (Examples 2A to 4A)

Decorative laminates were produced in the same manner as in Example 1A except that the conditions of each layer were changed as shown in Table 1.

### (Example 5A)

A decorative laminate was produced in the same manner as in Example 1A except that a melamine-based resin (reaction molar ratio: 1.4, resin solid content: 50% by mass) was applied to the surface of the transparent film on which the printed layer was provided so that the surface became the outer surface of the decorative laminate. That is, in this example, the decorative laminate was produced by laminating the coating layer, the printed layer, the transparent film, the first adhesive layer, the shielding layer, the second adhesive layer, and the core layer in this order (refer to FIG. 2).

### (Examples 6A to 8A)

Decorative laminates were produced in the same manner as in Example 5A except that the conditions of each layer were changed as shown in Table 1.

### (Comparative Example 1A)

A decorative laminate was produced in the same manner as in Example 1A except that the formation of the shielding layer was omitted. That is, a transparent film provided with a B-stage layer and a printed layer was prepared. An emulsion of urethane-acrylic composite particles was applied to the surface of the transparent film on which the printed layer was provided. Next, the transparent film and the substrate containing a binder were laminated via the applied emulsion without using the white polyethylene terephthalate film, and thus a laminate was obtained. Then, the laminate was subjected to heated pressure molding to produce a decorative laminate.

### (Comparative Example 2A)

A decorative laminate was produced in the same manner as in Example 1A except that the formation of the printed layer was omitted.

### (Comparative Example 3A)

A decorative laminate was produced in the same manner as in Example 1A except that the formation of the coating layer was omitted. That is, a decorative laminate was produced in the same manner as in Example 1A except that the application of the melamine-based resin to the surface of the transparent film opposite to the surface on which the printed layer was provided was omitted.

The conditions of the decorative laminates of each of Examples and Comparative Examples are collectively shown in Table 1. The layer physical properties used in the decorative laminates of each of Examples and Comparative Examples are as follows. Regarding all the transparent films, the transmittance of light of each wavelength in a range of 380 nm or more and 780 nm or less was 90% or more. In addition, regarding all the coating layers, the transmittance of light of each wavelength in a range of 380 nm or more and 780 nm or less was 90% or more. Further, the Martens hardness of all of the coating layers was a value in a range of 300 N/mm² or more and 700 N/mm² or less. Regarding all the shielding layers, the transmittance of light of each wavelength in a range of 380 nm or more and 780 nm or less was 30% or less. In addition, the core layer of the decorative laminate of each of Examples and Comparative Examples had a calorific value of 6 MJ/m² or less in a case where cone calorimeter test was performed.

**[Table 1]**

| | Coating layer | | Transparent film | | Shielding layer | | Core material laver | Arrangement of each layer |
|---|---|---|---|---|---|---|---|---|
| | Constituent material | Thickness [µm] | Constituent material | Thickness [µm] | Constituent material | Thickness [µm] | Thickness [µm] | |
| Example 1A | Melamine-based resin | 15 | PET | 100 | PET | 50 | 100 | Coating layer/transparent film/printed layer/first adhesive layer/shielding layer/second adhesive laver/core material laver |
| Example 2A | Melamine-based resin | 15 | PET | 50 | PET | 50 | 100 | Coating layer/transparent film/printed layer/first adhesive layer/shielding layer/second adhesive laver/core material laver |
| Example 3A | Melamine-based resin | 1 | PET | 50 | PET | 50 | 200 | Coating layer/transparent film/printed layer/first adhesive layer/shielding layer/second adhesive laver/core material laver |
| Example 4A | Melamine-based resin | 30 | PET | 50 | PET | 38 | 80 | Coating layer/transparent film/printed layer/first adhesive layer/shielding layer/second adhesive laver/core material laver |
| Example 5A | Melamine-based resin | 15 | PET | 100 | PET | 38 | 100 | Coating layer/printed layer/transparent film/first adhesive layer/shielding layer/second adhesive laver/core material laver |
| Example 6A | Melamine-based resin | 15 | PET | 50 | PET | 50 | 100 | Coating layer/printed layer/transparent film/first adhesive layer/shielding layer/second adhesive laver/core material laver |
| Example 7A | Melamine-based resin | 15 | PET | 50 | PET | 50 | 200 | Coating layer/printed layer/transparent film/first adhesive layer/shielding layer/second adhesive laver/core material laver |
| Example 8A | Melamine-based resin | 10 | PET | 12 | PET | 50 | 80 | Coating layer/printed layer/transparent film/first adhesive layer/shielding layer/second adhesive laver/core material laver |
| Comparative Example 1A | Melamine-based resin | 15 | PET | 100 | - | - | 100 | Coating layer/transparent film/printed laver/adhesive laver/core material laver |
| Comparative Example 2A | Melamine-based resin | 15 | PET | 100 | PET | 50 | 100 | Coating layer/transparent film/first adhesive layer/shielding layer/second adhesive layer/core material laver |
| Comparative Example 3A | - | - | PET | 100 | PET | 50 | 100 | Transparent film/printed layer/first adhesive layer/shielding layer/second adhesive layer/core material laver |

### [2A] Evaluation

The following evaluations were performed on the decorative laminates of Examples and Comparative Examples produced as described above.

### [2A. 1] Aesthetics

The decorative laminate was placed on a gypsum board (manufactured by Yoshino Gypsum Co., Ltd.) so that the core layer was in contact with the placing plate. That is, the decorative laminate was placed on a gypsum board (manufactured by Yoshino Gypsum Co., Ltd.) so that the surface (outer surface) opposite to the surface on which the core layer was provided faced upward. In this state, the decorative laminate was observed from the outer surface side, and the aesthetics thereof were evaluated according to the following criteria.
A: The decorative laminate has a very excellent external appearance.
B: The decorative laminate has an excellent external appearance.
C: The decorative laminate has a good external appearance.
D: The aesthetics of the decorative laminate are slightly poor.
E: The aesthetics of the decorative laminate are very poor.

### [2A. 2] Antifouling Property (Stain Resistance) Test

The decorative laminate was treated by a method based on the stain resistance test of JIS K 6902, and the state of the residual stained material on the outer surface of the decorative laminate was confirmed and evaluated according to the following criteria.
A: No residual stained material was observed on the outer surface of the decorative laminate.
B: Almost no residual stained material is observed on the outer surface of the decorative laminate.
C: Slight amount of residual stain material is observed on the outer surface of the decorative laminate.
D: The residual stained material is clearly observed on the outer surface of the decorative laminate.
E: The residual stained material is remarkably observed on the outer surface of the decorative laminate.

### [2A. 3] Scratch Resistance (Wear Resistance) Test

The wear resistance of the decorative laminate, which was measured by a method according to the wear resistance test of JIS K 6902, was confirmed, and the evaluation was performed according to the following criteria.
A: The wear resistance was 1000 rotations or more.
B: The wear resistance was 500 rotations or more and less than 1000 rotations.
C: The wear resistance was 300 rotations or more and less than 500 rotations.
D: The wear resistance was 100 rotations or more and less than 300 rotations.
E: The wear resistance was less than 100 rotations.

The results are collectively shown in Table 2.

**[Table 2]**

| | Aesthetics | Antifouling properties | Scratch resistance |
|---|---|---|---|
| Example 1A | A | A | A |
| Example 2A | A | A | B |
| Example 3A | A | C | B |
| Example 4A | B | A | B |
| Example 5A | B | A | A |
| Example 6A | A | A | B |
| Example 7A | A | A | B |
| Example 8A | A | A | C |
| Comparative Example 1A | E | A | A |
| Comparative Example 2A | C | A | A |
| Comparative Example 3A | A | E | E |

As clearly seen from Table 2, in the present invention, decorative laminates having excellent aesthetics and excellent scratch resistance and antifouling properties (stain resistance) were obtained. In contrast, in Comparative Examples, satisfactory results were not obtained.

Next, Examples and Comparative Examples focusing on evaluation of a three-dimensional effect will be described.

### [1B] Production of Decorative Laminate

### (Example 1B)

First, a polyethylene terephthalate film having an ink receiving layer was prepared as a transparent film. This transparent film had a thickness of 100 µm.

Next, a printed layer was formed on the surface of the transparent film on which the ink receiving layer was provided in a predetermined pattern (wood grain pattern) by an ink jet method.

In forming the printed layer, an ink containing a pigment and an acrylic resin as an ultraviolet curable resin was used. In addition, after the ink was jetted by the ink jet method, the ink landed on the transparent film was irradiated with ultraviolet rays to be cured. Thus, a printed layer was formed.

Next, a melamine-based resin (reaction molar ratio: 1.4, resin solid content: 50% by mass) was applied to the surface side of the transparent film opposite to the surface on which the printed layer was provided to form a coating film. Then, the coating film was dried for 90 seconds with a hot air dryer at 120°C to obtain a B-stage layer (a layer constituted of a material containing a B-stage curable resin (melamine-based resin)). The melamine-based resin was synthesized by the following method. First, raw material melamine and formalin were charged in a reaction vessel at a predetermined blending ratio, and a catalyst was added, followed by reacting while refluxing after raising the temperature to the boiling point. After confirming that the melamine dissolution was completed, a dehydration treatment was performed after having reached the reaction end point to prepare the resin solid content and cooling was performed. A melamine-based resin was synthesized by this method.

On the other hand, a white polyethylene terephthalate film (white PET film as a member to become a shielding layer) constituted of a material containing titanium oxide, and a substrate (a member to become a core layer) constituted of a core layer material formed of a prepreg containing a binder and a glass cloth as a base material were prepared. In addition, an emulsion of urethane-acrylic composite particles ("SU-100" manufactured by Chirika Co., Ltd., average particle diameter: 84 nm, dispersion medium: water) was applied to both surfaces of the white polyethylene terephthalate film to have a solid content of 10 g/m².

Next, the transparent film provided with the B-stage layer and the printed layer, the white polyethylene terephthalate film coated with the emulsion of urethane-acrylic composite particles, and the substrate containing a binder were laminated in this order to obtain a laminate. At this time, the transparent film provided with the B-stage layer and the printed layer was placed so that the surface on which the printed layer was provided faced the white polyethylene terephthalate film.

Thereafter, the obtained laminate was subjected to heated pressure molding under the conditions of a temperature of 140°C and a pressure of 2 MPa for 40 minutes. Thus, a decorative laminate (melamine decorative laminate) having a thickness of 0.3 mm formed by laminating the coating layer (thickness: 15 µm) constituted of a hard resin material, the transparent film (thickness: 100 µm), the printed layer, the gap layer (first adhesive layer), the shielding layer (thickness: 50 µm), the adhesive layer (second adhesive layer), and the core layer (thickness: 100 µm) in this order was obtained (refer to FIG. 7) .

As the glass cloth, a glass cloth constituted of glass fibers of E glass and having a basis weight of 104 g/m² was used. In addition, the binder contained in the prepreg was an acrylic resin. In addition, the content of the binder with respect to the glass fiber (100 parts by mass) in the prepreg was 1.50 parts by mass.

### (Examples 2B to 6B)

Decorative laminates were produced in the same manner as in Example 1B except that the conditions of each layer were changed as shown in Table 3.

### (Comparative Example 1B)

A decorative laminate was produced in the same manner as in Example 1B except that the formation of the shielding layer was omitted. That is, a transparent film provided with a B-stage layer and a printed layer was prepared. An emulsion of urethane-acrylic composite particles was applied to the surface of the transparent film on which the printed layer was provided. Next, the transparent film and the substrate containing a binder were laminated via the applied emulsion without using the white polyethylene terephthalate film, and thus a laminate was obtained. Then, the laminate was subjected to heated pressure molding to produce a decorative laminate.

### (Comparative Example 2B)

A decorative laminate was produced in the same manner as in Example 1B except that the formation of the printed layer was omitted.

### (Comparative Example 3B)

A decorative laminate was produced in the same manner as in Example 1B except that the formation of the coating layer was omitted. That is, a decorative laminate was produced in the same manner as in Example 1B except that the application of the melamine-based resin to the surface of the transparent film on the side opposite to the surface on which the printed layer was provided was omitted.

### (Reference Examples 4B and 5B)

Decorative laminates were produced in the same manner as in Example 1B except that the conditions of each layer were changed as shown in Table 3.

The conditions of the decorative laminates of each of Examples, Reference Examples, and Comparative Examples collectively shown in Table 3. The layer physical properties used in the decorative laminates of each of Examples, Reference Examples, and Comparative Examples are as follows. Regarding all the transparent films, the transmittance of light of each wavelength in a range of 380 nm or more and 780 nm or less was 90% or more. In addition, regarding all the coating layers, the transmittance of light of each wavelength in a range of 380 nm or more and 780 nm or less was 90% or more. Further, the Martens hardness of all of the coating layers was a value in a range of 300 N/mm² or more and 700 N/mm² or less. Regarding all the shielding layers, the transmittance of light of each wavelength in a range of 380 nm or more and 780 nm or less was 30% or less. In addition, all the core layers of the decorative laminates of Examples, Reference Examples, and Comparative Examples had a calorific value of 6 MJ/m² or less in a case where cone calorimeter test was performed.

**[Table 3]**

| | Coating layer | | Transparent film | | Printed layer | Gap layer | | Shielding layer | | Core material layer |
|---|---|---|---|---|---|---|---|---|---|---|
| | Constituent material | Thickness [µm] | Constituent material | Thickness [µm] | Thickness [µm] | Constituent material | Gap length [µm] | Constituent material | Thickness [µm] | Thickness [µm] |
| Example 1B | Melamine-based resin | 15 | PET | 100 | 2 | Urethane acryl | 15 | PET | 50 | 100 |
| Example 2B | Melamine-based resin | 15 | PET | 50 | 2 | Urethane acryl | 3 | PET | 50 | 100 |
| Example 3B | Melamine-based resin | 1 | PET | 50 | 2 | Urethane acryl | 15 | PET | 50 | 200 |
| Example 4B | Melamine-based resin | 30 | PET | 50 | 2 | Urethane acryl | 15 | PET | 38 | 80 |
| Example 5B | Melamine-based resin | 15 | PET | 100 | 2 | Urethane acryl | 40 | PET | 38 | 100 |
| Example 6B | Melamine-based resin | 15 | PET | 50 | 2 | Vinyl acetate | 15 | PET | 50 | 100 |
| Comparative Example 1B | Melamine-based resin | 15 | PET | 100 | 2 | - | - | - | - | 100 |
| Comparative Example 2B | Melamine-based resin | 15 | PET | 100 | - | Urethane acryl | 15 | PET | 50 | 100 |
| Comparative Example 3B | - | - | PET | 100 | 2 | Urethane acryl | 15 | PET | 50 | 100 |
| Reference Example 4B | Melamine-based resin | 15 | PET | 100 | 2 | Urethane acryl | 0.4 | PET | 50 | 100 |
| Reference Example 5B | Melamine-based resin | 15 | PET | 100 | 2 | Urethane acryl | 55 | PET | 50 | 100 |

### [2B] Evaluation

The following evaluations were performed on the decorative laminates produced in Examples, Reference Examples, and Comparative Examples above.

### [2B. 1] Aesthetics (Three-Dimensional Effect and Overall Evaluation)

The decorative laminate was placed on a gypsum board (manufactured by Yoshino Gypsum Co., Ltd.) so that the core layer was in contact with the placing plate. That is, the decorative laminate was placed on a gypsum board (manufactured by Yoshino Gypsum Co., Ltd.) so that the surface (outer surface) opposite to the surface on which the core layer was provided faced upward. In this state, the decorative laminate was observed from the outer surface side, and the three-dimensional effect and overall evaluation for the aesthetics thereof were evaluated according to the following criteria.

### (Three-Dimensional Effect)

A: The decorative laminate is full of a three-dimensional effect.
B: The decorative laminate exhibits an excellent three-dimensional effect.
C: The decorative laminate has an external appearance with a three-dimensional effect.
D: The three-dimensional effect is slightly observed.
E: A three-dimensional effect is not observed.

### (Overall Evaluation)

A: The decorative laminate has a very excellent external appearance.
B: The decorative laminate has an excellent external appearance.
C: The decorative laminate has a good external appearance.
D: The aesthetics of the decorative laminate are slightly poor.
E: The aesthetics of the decorative laminate are very poor.

### [2B. 2] Antifouling Property (Stain Resistance) Test

The decorative laminate was treated by a method based on the stain resistance test of JIS K 6902, and the state of the residual stained material on the outer surface of the decorative laminate was confirmed and evaluated according to the following criteria.
A: No residual stained material was observed on the outer surface of the decorative laminate.
B: Almost no residual stained material is observed on the outer surface of the decorative laminate.
C: Slight amount of residual stain material is observed on the outer surface of the decorative laminate.
D: The residual stained material is clearly observed on the outer surface of the decorative laminate.
E: The residual stained material is remarkably observed on the outer surface of the decorative laminate.

### [2B. 3] Scratch Resistance (Wear Resistance) Test

The wear resistance of the decorative laminate, which was measured by a method based on the wear resistance test of JIS K 6902, was confirmed, and the evaluation was performed according to the following criteria.
A: The wear resistance was 1000 rotations or more.
B: The wear resistance was 500 rotations or more and less than 1000 rotations.
C: The wear resistance was 300 rotations or more and less than 500 rotations.
D: The wear resistance was 100 rotations or more and less than 300 rotations.
E: The wear resistance was less than 100 rotations.

### [2B. 4] Pencil Hardness

The decorative laminate was treated by a method based on the pencil hardness test of JIS K 5600, and the strength of the outer surface of the decorative laminate against indentation was confirmed and evaluated according to the following criteria.
A: The pencil hardness was 5H or higher.
B: The pencil hardness was 3H or more and less than 5H.
C: The pencil hardness was H or more and less than 3H.
D: The pencil hardness was B or more and less than H.
E: The pencil hardness was less than B.

These results are collectively shown in Table 4.

**[Table 4]**

| | Aesthetics | | Antifouling properties | Scratch resistance | Pencil hardness |
|---|---|---|---|---|---|
| | Three-dimensional effect | Overall evaluation | | | |
| Example 1B | A | A | A | A | B |
| Example 2B | D | A | A | B | A |
| Example 3B | B | B | C | B | B |
| Example 4B | B | B | A | B | B |
| Example 5B | A | A | A | A | C |
| Example 6B | B | A | A | B | B |
| Comparative Example 1B | E | E | A | A | E |
| Comparative Example 2B | E | E | A | A | B |
| Comparative Example 3B | A | A | E | E | E |
| Reference Example 4B | E | D | A | A | A |
| Reference Example 5B | A | D | A | A | D |

As clearly seen from Table 4, in each of Examples, a decorative laminate having a full three-dimensional effect, excellent aesthetics, scratch resistance, and antifouling properties (antifouling properties) was obtained. In contrast, in each of Comparative Examples, satisfactory results were not obtained.

Next, Examples and Comparative Examples focusing on contrast evaluation and the like will be described.

### [1C] Production of Decorative Laminates

### (Example 1C)

First, a shielding layer having a white ink receiving layer was prepared on a base constituted of polyethylene terephthalate. The shielding layer had a thickness of 53 µm.

On the surface of the prepared shielding layer on which the ink receiving layer was provided, a printed layer was formed in a predetermined pattern (grain pattern) by an ink jet method.

In forming the printed layer, an ink containing a pigment and an acrylic resin as an ultraviolet curable resin was used. After the ink was jetted by the ink jet method, the ink landed on the shielding layer was irradiated with ultraviolet rays to be cured. Thus, a printed layer was formed.

On the other hand, a polyethylene terephthalate film was prepared as a transparent film. This transparent film had a thickness of 100 µm.

A melamine-based resin (reaction molar ratio: 1.4, resin solid content: 50% by mass) was applied to one surface of the prepared transparent film to form a coating film. Then, the coating film was dried for 90 seconds with a hot air dryer at 120°C to obtain a B-stage layer (a layer constituted of a material containing a B-stage curable resin (melamine-based resin)). The melamine-based resin was synthesized by the following method. First, raw material melamine and formalin were charged in a reaction vessel at a predetermined blending ratio, and a catalyst was added, followed by reacting while refluxing after raising the temperature to the boiling point. After confirming that the melamine dissolution was completed, a dehydration treatment was performed after having reached the reaction end point to prepare the resin solid content and cooling was performed. A melamine-based resin was synthesized by this method.

Next, a substrate (a member to become a core layer) constituted of a core layer material formed of a prepreg containing a binder and a glass cloth as a base material was prepared. In addition, an emulsion of urethane-acrylic composite particles ("SU-100" manufactured by Chirika Co., Ltd., average particle diameter: 84 nm, dispersion medium: water) was applied to the front and back surfaces (both surfaces) of the shielding layer provided with the printed layer to have a solid content of 10 g/m².

Next, the transparent film provided with the B-stage layer, the shielding layer having both surfaces coated with the emulsion of urethane-acrylic composite particles (the shielding layer provided with the printed layer), and the substrate containing a binder were laminated in this order to obtain a laminate. At this time, the shielding layer provided with the printed layer was placed such that the surface on which the printed layer was provided faced the transparent film.

Thereafter, the obtained laminate was subjected to heated pressure molding under the conditions of a temperature of 140°C and a pressure of 2 MPa for 40 minutes. Thus, a decorative a laminate (melamine decorative laminate) having a thickness of 0.3 mm formed by laminating the coating layer (thickness: 15 µm) constituted of a hard resin material, the transparent film (thickness: 100 µm), the first adhesive layer, the printed layer, the shielding layer (thickness: 53 µm), the second adhesive layer, and the core layer (thickness: 100 µm) in this order was obtained (refer to FIG. 8).

As the glass cloth, a glass cloth constituted of glass fibers of E glass and having a basis weight of 104 g/m² was used. In addition, the binder contained in the prepreg was an acrylic resin. In addition, the content of the binder with respect to the glass fiber (100 parts by mass) in the prepreg was 1.50 parts by mass.

### (Examples 2C to 4C)

Decorative laminates were produced in the same manner as in Example 1C except that the conditions of each layer were changed as shown in Table 5.

### (Comparative Example 1C)

A decorative laminate was produced in the same manner as in Example 1C except that the formation of the shielding layer was omitted. That is, a printed layer was formed on one surface of the transparent film provided with the B-stage layer. In addition, an emulsion of urethane-acrylic composite particles was applied to the surface of the transparent film on which the printed layer was provided. Next, the transparent film and the substrate containing a binder were laminated via the applied emulsion without using the shielding layer to obtain a laminate. Then, the laminate was subjected to heated pressure molding to produce a decorative laminate.

### (Comparative Example 2C)

A decorative laminate was produced in the same manner as in Example 1C except that the formation of the printed layer was omitted.

### (Comparative Example 3C)

A decorative laminate was produced in the same manner as in Example 1C except that the formation of the coating layer was omitted. That is, a decorative laminate was produced in the same manner as in Example 1C except that the application of the melamine-based resin to the surface of the transparent film opposite to the surface on which the printed layer was provided was omitted.

### (Reference Example 4C)

A decorative laminate was produced in the same manner as in Example 1C except that the printed layer was formed on the surface of the transparent film on the side opposite to the surface facing the coating layer instead of forming the printed layer on the surface of the shielding layer.

The conditions of the decorative laminates of each of Examples, Reference Examples, and Comparative Examples collectively shown in Table 5. The layer physical properties used in the decorative laminates of each of Examples, Reference Examples, and Comparative Examples are as follows. Regarding all the transparent films, the transmittance of light of each wavelength in a range of 380 nm or more and 780 nm or less was 90% or more. In addition, regarding all the coating layers, the transmittance of light of each wavelength in a range of 380 nm or more and 780 nm or less was 90% or more. Further, the Martens hardness of all of the coating layers was a value in a range of 300 N/mm² or more and 700 N/mm² or less. Regarding all the shielding layers, the transmittance of light of each wavelength in a range of 380 nm or more and 780 nm or less was 30% or less. In addition, all the core layers of the decorative laminates of Examples, Reference Examples, and Comparative Examples had a calorific value of 6 MJ/m² or less in a case where cone calorimeter test was performed.

**[Table 5]**

| | Coating layer | | Transparent film | | First adhesive layer | | Printed layer | Shielding layer | | | | Core material layer |
|---|---|---|---|---|---|---|---|---|---|---|---|---|
| | Constituent material | Thickness [µm] | Constituen t material | Thickness [µm] | Constituent material | Thickness [µm] | Thickness [µm] | Ink receiving layer | | Base | | Thickness [µm] |
| | | | | | | | | Constituent material | Thickness [µm] | Constituent material | Thickness [µm] | |
| Example 1C | Melamine-based resin | 15 | PET | 100 | Urethane acryl | 15 | 2 | Urethane acryl | 3 | PET | 50 | 100 |
| Example 2C | Melamine-based resin | 15 | PET | 100 | Urethane acryl | 3 | 2 | Urethane acryl | 10 | PET | 50 | 100 |
| Example 3C | Melamine-based resin | 15 | PET | 50 | Vinyl acetate | 15 | 2 | Urethane acryl | 3 | PET | 25 | 200 |
| Example 4C | Melamine-based resin | 30 | PET | 50 | Urethane acryl | 15 | 2 | Urethane | 15 | PET | 50 | 80 |
| Comparative Example 1C | Melamine-based resin | 15 | PET | 100 | Urethane acryl | 15 | 2 | - | - | - | - | 100 |
| Comparative Example 2C | Melamine-based resin | 15 | PET | 100 | Urethane acryl | 15 | - | Urethane acryl | 3 | PET | 50 | 100 |
| Comparative Example 3C | - | - | PET | 100 | Urethane acryl | 15 | 2 | Urethane acryl | 3 | PET | 50 | 100 |
| Reference Example 4C | Melamine-based resin | 15 | PET | 100 | Urethane acryl | 15 | 2 | - | - | PET | 50 | 100 |

### [2C] Evaluation

The following evaluations were performed on the decorative laminates produced in Examples, Reference Examples, and Comparative Examples above.

### [2C. 1] Aesthetics

The decorative laminate was placed on a gypsum board (manufactured by Yoshino Gypsum Co., Ltd.) so that the core layer was in contact with the placing plate. That is, the decorative laminate was placed on a gypsum board (manufactured by Yoshino Gypsum Co., Ltd.) so that the surface (outer surface) opposite to the surface on which the core layer was provided faced upward. In this state, the decorative laminate was observed from the outer surface side, and the contrast and the overall evaluation were performed according to the following criteria.

### [2C. 1.1] Contrast

A: The contrast is very excellent.
B: The contrast is excellent.
C: The contrast is good.
D: The contrast is slightly poor.
E: The contrast is poor.

### [2C. 1.2] Overall evaluation

A: The decorative laminate has a very excellent external appearance.
B: The decorative laminate has an excellent external appearance.
C: The decorative laminate has a good external appearance.
D: The aesthetics of the decorative laminate are slightly poor.
E: The aesthetics of the decorative laminate are very poor.

### [2C. 2] Antifouling Property (Stain Resistance) Test

The decorative laminate was treated by a method based on the stain resistance test of JIS K 6902, and the state of the residual stained material on the outer surface of the decorative laminate was confirmed and evaluated according to the following criteria.
A: No residual stained material was observed on the outer surface of the decorative laminate.
B: Almost no residual stained material is observed on the outer surface of the decorative laminate.
C: Slight amount of residual stain material is observed on the outer surface of the decorative laminate.
D: The residual stained material is clearly observed on the outer surface of the decorative laminate.
E: The residual stained material is remarkably observed on the outer surface of the decorative laminate.

### [2C. 3] Scratch Resistance (Wear Resistance) Test

The wear resistance of the decorative laminate, which was measured by a method based on the wear resistance test of JIS K 6902, was confirmed, and the evaluation was performed according to the following criteria.
A: The wear resistance was 1000 rotations or more.
B: The wear resistance was 500 rotations or more and less than 1000 rotations.
C: The wear resistance was 300 rotations or more and less than 500 rotations.
D: The wear resistance was 100 rotations or more and less than 300 rotations.
E: The wear resistance was less than 100 rotations.

### [2C. 4] Interlayer Adhesion Evaluation

The interlayer adhesion of the decorative laminate measured by a method according to JIS K 6854-1: "Adhesive, Peel Strength Test Method, Part 1: 90° Peel" was confirmed and evaluated according to the following criteria.
A: The peel strength was 10 N or more.
B: The peel strength was 7 N or more and less than 10 N.
C: The peel strength was 2N or more and less than 7N.
D: The peel strength was less than 2N.
E: The peel strength could not be measured.

The results are collectively shown in Table 6.

**[Table 6]**

| | Aesthetics | | Antifouling properties | Scratch resistance | Interlayer adhesion |
|---|---|---|---|---|---|
| | Contrast | Overall evaluation | | | |
| Example 1C | C | A | A | A | B |
| Example 2C | A | A | A | A | A |
| Example 3C | C | A | A | B | B |
| Example 4C | B | A | A | B | A |
| Comparative Example 1C | E | E | A | A | C |
| Comparative Example 2C | E | E | A | A | A |
| Comparative Example 3C | C | A | E | E | B |
| Reference Example 4C | D | A | A | A | D |

As clearly seen from Table 6, in each of Examples, a decorative laminate having excellent aesthetics, durability (scratch resistance, interlayer adhesion), and antifouling properties (antifouling properties) was obtained. In contrast, in each of Comparative Examples, satisfactory results were not obtained.

### Industrial Applicability

According to the present invention, it is possible to provide a decorative laminate having excellent aesthetics and excellent scratch resistance and antifouling properties (stain resistance). Therefore, the present invention has industrial applicability.

### Reference Signs List

- 100:: decorative laminate
- 1:: transparent film (transparent base material)
- 11:: first surface
- 12:: second surface
- 2:: coating layer (hard resin layer)
- 3:: printed layer
- 4:: shielding layer
- 5:: core material (core layer)
- 6:: gap layer, adhesive layer (first adhesive layer)
- 7:: adhesive layer (second adhesive layer)
- 8:: support layer
- 9:: protective layer
- L:: gap length

## Claims

1. A decorative laminate comprising:
a transparent film;
a coating layer constituted of a hard resin material and disposed on a side of a first surface which is one surface of the transparent film;
a shielding layer disposed on a side of a second surface of the transparent film, which is the other surface opposite to the first surface; and
a printed layer disposed between the coating layer and the shielding layer.

2. The decorative laminate according to claim 1,
wherein the printed layer is disposed on the side of the second surface of the transparent film.

3. The decorative laminate according to claim 2, further comprising:
a gap layer provided between the printed layer and the shielding layer,
wherein a gap length from a surface of the printed layer to a surface of the shielding layer in a case of being observed from the coating layer side of the decorative laminate is 1 µm or more and 50 µm or less.

4. The decorative laminate according to claim 3,
wherein the gap layer is an adhesive layer that bonds the printed layer to the shielding layer.

5. The decorative laminate according to claim 2, comprising an adhesive layer,
wherein the printed layer is provided on a surface of the shielding layer facing the transparent film, and
wherein the adhesive layer is provided between the transparent film and the shielding layer provided with the printed layer.

6. The decorative laminate according to any one of claims 1 to 5,
wherein the printed layer is disposed on the side of the first surface of the transparent film.

7. The decorative laminate according to any of claims 1 to 6,
wherein the hard resin material constituting the coating layer contains a melamine-based resin.

8. The decorative laminate according to any one of claims 1 to 7, further comprising:
a core layer on a surface side of the shielding layer opposite to a surface facing the transparent film.

9. The decorative laminate according to claim 8,
wherein the core layer contains glass fibers.

10. The decorative laminate according to any one of claims 1 to 9,
wherein the shielding layer exhibits white or metallic luster.

11. The decorative laminate according to any one of claims 1 to 10,
wherein the shielding layer is constituted of a material containing polyethylene terephthalate.

12. The decorative laminate according to claim 11,
wherein the shielding layer is constituted of a material containing at least one of titanium oxide and zinc oxide in addition to the polyethylene terephthalate.

13. The decorative laminate according to any one of claims 1 to 12,
wherein the shielding layer has a thickness of 10 µm or more and 300 µm or less.

14. The decorative laminate according to any one of claims 1 to 13,
wherein the transparent film includes a base constituted of a material containing polyethylene terephthalate, and an ink receiving layer.

15. The decorative laminate according to any one of claims 1 to 14,
wherein the shielding layer includes an ink receiving layer.
